(19) Europäisches Patentamt
European Patent Office
Office européen des brevets

(11) **EP 1 923 672 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
*G01D 5/38* *(2006.01)*   *G01D 5/245* *(2006.01)*

(21) Anmeldenummer: **07019809.8**

(22) Anmeldetag: **10.10.2007**

(54) **Positionsmesseinrichtung**

Position measuring device

Dispositif de mesure de position

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.11.2006 DE 102006054780**
**27.07.2007 DE 102007035345**

(43) Veröffentlichungstag der Anmeldung:
**21.05.2008 Patentblatt 2008/21**

(73) Patentinhaber: **Dr. Johannes Heidenhain GmbH 83301 Traunreut (DE)**

(72) Erfinder: **Sändig, Karsten, Dr. 83349 Palling (DE)**

(56) Entgegenhaltungen:
**WO-A2-03/021194        DE-A1- 4 030 049**
**DE-A1-102005 006 247   US-A- 5 981 941**

**Beschreibung**

Die vorliegende Erfindung betrifft eine Positionsmesseinrichtung.

Bekannte Positionsmesseinrichtungen liefern neben periodischen Inkrementalsignalen bzgl. des Relativversatzes zweier zueinander beweglicher Objekte auch sogenannte Referenzimpulssignale. Über die Referenzimpulssignale kann an bestimmten vorgegebenen Referenzpositionen entlang der Messstrecke ein exakter Absolutbezug bzgl. der Position der beiden zueinander beweglichen Objekte hergestellt werden. Auf die derart bestimmte Absolutposition kann dann die üblicherweise deutlich höher auflösende Inkrementalmessung nachfolgend bezogen werden. Zur Erzeugung der Referenzimpulssignale sind bereits eine Vielzahl von Möglichkeiten bekannt geworden. Hierzu sei beispielsweise auf die US 5,073,710 oder die US 5,981,941 verwiesen, die jeweils Varianten für optische Positionsmesseinrichtungen offenbaren. Zur Erzeugung der Referenzimpulssignale werden in diesen Druckschriften jeweils diffraktive Referenzmarkierungsstrukturen benachbart zur Inkrementalspur auf der Maßverkörperungsseite an der Referenzposition angeordnet. Aus der Abtastung der Referenzmarkierung resultiert an den jeweiligen Positionen ein entsprechendes Referenzimpulssignal.

Insbesondere bei hochauflösenden optischen Positionsmesseinrichtungen, die im Auflicht betrieben werden, resultieren nunmehr bestimmte Anforderungen an die Erzeugung der Referenzimpulssignale. So sollte auch bei einer eventuellen Verkippung von Abtasteinheit und Reflexions-Maßverkörperung, z.B. verursacht durch eine nicht-optimale Montage derselben, möglichst kein Positionsfehler resultieren. Dies gilt hierbei sowohl für die Erzeugung der Inkrementalsignale als auch für die Erzeugung der Referenzimpulssignale. In Bezug auf die Lösung dieser Problematik finden sich in den beiden o.g. Druckschriften keine Hinweise.

Aufgabe der vorliegenden Erfindung ist es daher, eine hochauflösende Positionsmesseinrichtung für den Auflicht-Betrieb anzugeben, bei der die Erzeugung von Referenzimpulssignalen möglichst wenig durch eventuelle Verkippungen zwischen Abtasteinheit und Reflexionsmaßverkörperung gestört wird.

Diese Aufgabe wird durch eine Positionsmesseinrichtung mit den Merkmalen des Anspruchs 1 gelöst.

Vorteilhafte Ausführungsformen ergeben sich aus den Maßnahmen, die in den abhängigen Ansprüchen aufgeführt sind.

Erfindungsgemäß wird nunmehr vorgesehen, das gleiche Verhalten bzgl. einer Verkippung von Abtasteinheit und Reflexions-Maßverkörperung für die Erzeugung der Inkrementalsignale wie auch für die Erzeugung der Referenzimpulssignale vorzusehen. Für beide Abtastungen wird daher sichergestellt, dass die sog. neutralen Drehpunkte der beiden Abtastungen zusammenfallen. Unter dem neutralen Drehpunkt der jeweiligen Abtastung wird hierbei derjenige Punkt verstanden, um den eine Verkippung von Abtasteinheit und Reflexions-Maßverkörperung erfolgen kann, ohne dass ein Positionsfehler resultiert.

Im Rahmen der vorliegenden Erfindung wurde erkannt, dass insbesondere durch gezielte Maßnahmen in Bezug auf die Erzeugung der Referenzimpulssignale eine definierte Einstellung der Lage des neutralen Drehpunkts der Referenzimpulssignal-Erzeugung möglich ist. Dadurch kann dieser mit dem neutralen Drehpunkt bei der Inkrementalsignalerzeugung in Übereinstimmung gebracht werden. Der neutrale Drehpunkt der Inkrementalsignalerzeugung resultiert beim Design einer derartigen Positionsmesseinrichtung üblicherweise aus den jeweiligen Systemanforderungen. Über die erfindungsgemäßen Maßnahmen lässt sich nunmehr der neutrale Drehpunkt der Referenzimpulssignalerzeugung flexibel an unterschiedliche Gegebenheiten bei der Inkrementalsignalerzeugung anpassen. Dies kann dann etwa bedeuten, dass der neutrale Drehpunkt der Referenzimpulssignalerzeugung in einer Ebene oberhalb oder unterhalb der Reflexions-Maßverkörperung zu liegen kommt etc..

Hierzu ist eine Positionsmesseinrichtung zur Erzeugung eines Referenzimpulssignals an mindestens einer Referenzposition mit einer Abtasteinheit sowie einer hierzu in mindestens einer Messrichtung (x) beweglichen Reflexions-Maßverkörperung vorgesehen. Die Abtasteinheit umfasst zur Erzeugung des Referenzimpulssignals mehrere optische Elemente, worunter mindestens eine Abbildungsoptik, sowie mindestens zwei in einer Blendenebene angeordnete Blendenstrukturen mit jeweils mehreren Blendenöffnungen sind. Ferner sind der Abtasteinheit eine Lichtquelle sowie mindestens zwei Detektorelemente zugeordnet. Die Reflexions-Maßverkörperung umfasst an der mindestens einen Referenzposition eine Referenzmarkierung. Diese weist mindestens einen Satz erster Strukturelemente auf, die in der Ebene der Reflexions-Maßverkörperung senkrecht zur Messrichtung periodisch mit einer ersten Transversalperiodizität T1 angeordnet sind. Ferner weist die Referenzmarkierung mindestens einen Satz zweiter Strukturelemente auf, die in der Ebene der Reflexions-Maßverkörperung senkrecht zur Messrichtung periodisch mit einer zweiten Transversalperiodizität T2 angeordnet sind. Die erste und die zweite Transversalperiodizität unterscheiden sich voneinander. Die Strukturelemente sind als diffraktive Strukturelemente ausgebildet, die in Messrichtung optisch wie eine Zylinderlinse mit einer bestimmten Brennweite wirken und senkrecht zur Messrichtung wie ein Ablenkgitter mit der Teilungsperiode T1 oder T2 wirken.

Die Strukturelemente besitzen vorzugsweise in Messrichtung einen virtuellen oder reellen Brennpunkt im Brennweiten-Abstand von der Reflexions-Maßverkörperung.

Vorzugsweise entspricht die Brennweite der Strukturelemente dem halben Abstand des neutralen Drehpunktes von der Reflexions-Maßverkörperung. Hierbei ist der neutrale Drehpunkt als derjenige Punkt definiert, um den eine Verkippung der Abtasteinheit oder der Reflexions-Maßverkörperung möglich ist, ohne dass ein Positionsfehler resultiert.

Mit Vorteil ist die Abbildungsoptik in der Abtasteinheit derart dimensioniert, dass darüber eine Abbildung der bildseitigen Brennebene der Strukturelemente in die Blendenebene resultiert.

In einer möglichen Ausführungsform umfasst die Referenzmarkierung jeweils mehrere Sätze erster und zweiter Strukturelemente, wobei diese parallel und spiegelsymmetrisch zu einer Symmetrieachse senkrecht zur Messrichtung in der Maßverkörperungsebene angeordnet. Es liegen sich jeweils Strukturelemente mit unterschiedlicher Transversalperiodizität gegenüber.

Die einzelnen Strukturelemente können vorzugsweise eine Querschnittsform aufweisen, die sich aus zwei in Quererstreckungsrichtung parallelen Berandungsgeraden und zwei in Längserstreckungsrichtung gekrümmten, parallelen Berandungslinien zusammensetzt.

In einer möglichen Ausführungsform der erfindungsgemäßen Positionsmesseinrichtung weist die Reflexions-Maßverkörperung ferner mindestens eine periodische, sich in Messrichtung erstreckende Inkrementalteilung auf. Die Abtasteinheit umfasst ferner Abtastmittel, die zur Erzeugung periodischer Inkrementalsignale im Fall der Relativbewegung von Reflexions-Maßverkörperung und Abtasteinheit dienen.

In einer derartigen Positionsmesseinrichtung ist die Brennweite der Strukturelemente vorzugsweise dergestalt gewählt, dass darüber eine Anpassung bzgl. der Lage des neutralen Drehpunkts der Referenzimpulssignal-Erzeugung an die Lage des neutralen Drehpunkts der Inkrementalsignalerzeugung erfolgt. Hierbei sei der neutrale Drehpunkt als derjenige Punkt definiert, um den eine Verkippung der Abtasteinheit oder der Reflexions-Maßverkörperung möglich ist, ohne dass ein Positionsfehler resultiert.

Mit Vorteil ist in der erfindungsgemäßen Positionsmesseinrichtung die positionsmäßige Anordnung der Blendenöffnungen der beiden Blendenstrukturen in Messrichtung (x) auf die Anordnung der Strukturelemente der Referenzmarkierung abgestimmt.

Die Abbildungsoptik kann als Linsenarray, bestehend aus mehreren Einzellinsen, ausgebildet sein.

Die Abtasteinheit kann etwa eine Abtastplatte umfassen, auf der die Blendenstrukturen und die Abbildungsoptik angeordnet ist.

Die Abtastplatte kann hierbei folgendermaßen aufgebaut sein:

- auf deren der Reflexions-Maßverkörperung abgewandten Seite sind die Blendenstrukturen angeordnet, die als lichtdurchlässig/lichtundurchlässige Strukturen ausgebildet sind und
- auf deren der Reflexions-Maßverkörperung zugewandten Seite ist die Abbildungsoptik angeordnet.

Alternativ kann die Abtasteinheit eine Abtastplatte umfassen, auf deren der Reflexions-Maßverkörperung zugewandten Seite die Blendenstrukturen und die Abbildungsoptik angeordnet sind und die Blendenstrukturen als reflektierend/nichtreflektierende Strukturen ausgebildet sind.

Es kann hierbei auf der Abtastplatte ferner ein Aufspaltgitter angeordnet sein, über welches eine Aufspaltung eines von der Lichtquelle kommenden Strahlenbündels in ein zur Referenzimpulssignalerzeugung genutztes Teilstrahlenbündel und in ein zur Inkrementalsignalerzeugung genutztes Teilstrahlenbündel erfolgt.

Das Aufspaltgitter kann derart ausgebildet sein, dass eine konvergente Beleuchtung der Referenzmarkierung auf der Reflexions-Maßverkörperung resultiert.

Das Aufspaltgitter kann etwa als diffraktives Strahlteilerelement mit gekrümmten Gitterlinien ausgebildet sein.

Auf der Seite der Abtastplatte, die abgewandt zur Reflexions-Maßverkörperung orientiert ist, können ein oder mehrere Reflektorelemente angeordnet sein, die ein darauf einfallendes Strahlenbündel wieder in Richtung der Seite der Abtastplatte umlenken, die der Reflexions-Maßverkörperung zugewandt ist.

Das Aufspaltgitter kann etwa auf der Seite der Abtastplatte angeordnet sein, die der Reflexions-Maßverkörperung zugewandt ist.

In einer weiteren Ausführungsform der erfindungsgemäßen Positionsmesseinrichtung ist den zwei Detektorelementen ein Summen- und ein Differenzbildungselement nachgeordnet und diesen wiederum mehrere Komparatorelemente mit jeweils definiert vorgegebenen Triggerschwellen, die dergestalt miteinander verschaltet sind, dass ausgangsseitig ein Referenzimpulssignal mit einer Breite resultiert, die der Breite der erzeugten Inkrementalsignale entspricht.

Desweiteren kann die Abtasteinheit Korrekturmittel umfassen, um Hilfssignale zu erzeugen, die ein Maß für die Änderung des Winkels in Bezug auf die Abtastplatte darstellen, unter dem ein von der Lichtquelle kommendes Strahlenbündel in Richtung der Referenzmarkierung propagiert.

Hierbei kann die Abtasteinheit folgende Korrekturmittel zur Erzeugung der Hilfssignale umfassen:

- eine auf der der Reflexions-Maßverkörperung abgewandten Seite der Abtastplatte angeordnete Fresnellinse, deren Brennpunkt in der Ebene des Aufspaltgitters liegt und das von einem Teilstrahlenbündel beaufschlagt wird, das vom Aufspaltgitter aus dem einfallenden Strahlenbündel abgespalten wird,
- ein Reflektorelement, das im Brennpunkt der Fresnellinse auf der der Reflexions-Maßverkörperung zugewandten Seite der Abtastplatte angeordnet ist,
- zwei senkrecht zueinander angeordnete periodische Gitterstrukturen auf der der Reflexions-Maßverkörperung abgewandten Seite der Abtastplatte,
- zwei Hilfssignal-Detektorelemente, die in Differenz zueinander verschaltet sind und wobei das resultierende Differenzsignal als Hilfssignal zur Einstellung der Triggerschwellen dient.

Alternativ kann die Abtasteinheit folgende Korrekturmittel zur Erzeugung der Hilfssignale umfassen:

- eine auf der der Reflexions-Maßverkörperung abgewandten Seite der Abtastplatte angeordnete Gitterlinsenstruktur, die der Referenzmarkierung entspricht und deren Brennpunkt in der Ebene des Aufspaltgitters liegt und die von einem Teilstrahlenbündel beaufschlagt wird, das vom Aufspaltgitter aus dem einfallenden Strahlenbündel abgespalten wird,
- ein Reflektorelement, das im Brennpunkt der Gitterlinsenstruktur auf der der Reflexions-Maßverkörperung zugewandten Seite der Abtastplatte angeordnet ist,
- zwei auf der der Reflexions-Maßverkörperung abgewandten Seite der Abtastplatte angeordnete Blendenstrukturen,
- zwei Hilfssignal-Detektorelemente, die in Differenz zueinander verschaltet sind und wobei das resultierende Differenzsignal als Hilfssignal zur Einstellung der Triggerschwellen dient.

Weitere Einzelheiten und Vorteile der vorliegenden Erfindung seien anhand der nachfolgenden Beschreibung von Ausführungsbeispielen in den Figuren erläutert.

Es zeigt hierbei:

Figur 1a      eine erste Ansicht von Teil-Abtaststrahlengängen einer ersten Ausführungsform der erfindungsgemäßen Positionsmesseinrichtung zur Erläuterung der Referenzimpulssignalerzeugung;

Figur 1b      eine zweite Ansicht von Teil-Abtaststrahlengängen der ersten Ausführungsform der erfindungsgemäßen Positionsmesseinrichtung zur Erläuterung der Referenzimpulssignalerzeugung;

Figur 1c      eine dritte Ansicht von Teil-Abtaststrahlengängen der ersten Ausführungsform der erfindungsgemäßen Positionsmesseinrichtung zur Erläuterung der Inkrementalsignalerzeugung;

Figur 2      eine Teil-Draufsicht auf die Reflexions-Maßverkörperung der ersten Ausführungsform der erfindungsgemäßen Positionsmesseinrichtung inclusive einer Ausschnittsvergrößerung der Referenzmarkierung;

Figur 3a      eine Draufsicht auf die Unterseite der Abtastplatte der ersten Ausführungsform der erfindungsgemäßen Positionsmesseinrichtung;

Figur 3b      eine Draufsicht auf die Oberseite der Abtastplatte der ersten Ausführungsform der erfindungsgemäßen Positionsmesseinrichtung;

Figur 4a      eine Darstellung der resultierenden Signale zur Referenzimpulserzeugung mit der erfindungsgemäßen Positionsmesseinrichtung;

Figur 4b      eine Darstellung der Summen- und Differenzsignale, die aus den Signalen gemäß Fig. 4a gebildet werden, inclusive der zur Referenzimpulssignal-Erzeugung genutzten Triggerschwellen;

Figur 4c      eine Darstellung des resultierenden Referenzimpuls-Signals an der Referenzposition inclusive einer Darstellung der Inkrementalsignale;

Figur 5      eine schematisierte Darstellung einer geeigneten Schaltungsanordnung zur Verarbeitung der verschiedenen Signale und zur Erzeugung des Referenzimpulssignals gemäß den Figuren 4a - 4c;

Figur 6a - 6c      verschiedene Darstellungen analog zu Figur 1b mit unterschiedlichen Positionen des neutralen Drehpunkts bzw. mit verkippter Reflexions-Maßverkörperung;

Figur 7a      eine erste Ansicht von Teil-Abtaststrahlengängen einer zweiten Ausführungsform der erfindungsgemäßen Positionsmesseinrichtung zur Erläuterung der Referenzimpulssignalerzeugung;

Figur 7b      eine zweite Ansicht von Teil-Abtaststrahlengängen der zweiten Ausführungsform der erfindungsgemäßen Positionsmesseinrichtung zur Erläuterung der Referenzimpulssignalerzeugung;

Figur 8a      eine Draufsicht auf die Unterseite der Abtastplatte der zweiten Ausführungsform der erfindungsgemäßen Positionsmesseinrichtung;

Figur 8b      eine Draufsicht auf die Oberseite der Abtastplatte der zweiten Ausführungsform der erfindungsgemäßen Positionsmesseinrichtung;

Figur 9a      eine schematisierte Darstellung eines Teils des Abtaststrahlengangs einer dritten Ausführungsform, die zusätzliche Korrekturmittel für eine Korrektur der Strahlneigungsdrift umfasst;

Figur 9b      eine Draufsicht auf die Oberseite der Abtastplatte der dritten Ausführungsform der erfindungsgemäßen Positionsmesseinrichtung;

Figur 9c      eine Draufsicht auf die Unterseite der Abtastplatte der dritten Ausführungsform der erfindungsgemäßen Positionsmesseinrichtung;

Figur 10      eine schematisierte Darstellung der Schaltungsanordnung zur Verarbeitung der Hilfssignale zur Korrektur der Strahlneigungsdrift;

Figur 11a      eine schematisierte Darstellung eines Teils des Abtaststrahlengangs einer vierten Ausführungsform, die alternative Korrekturmittel für eine Korrektur der Strahlneigungsdrift umfasst;

Figur 11b      eine Draufsicht auf die Oberseite der Abtastplatte der vierten Ausführungsform der erfindungsgemäßen Positionsmesseinrichtung;

Figur 11c      eine Draufsicht auf die Unterseite der Abtastplatte der vierten Ausführungsform der erfindungsgemäßen Positionsmesseinrichtung;

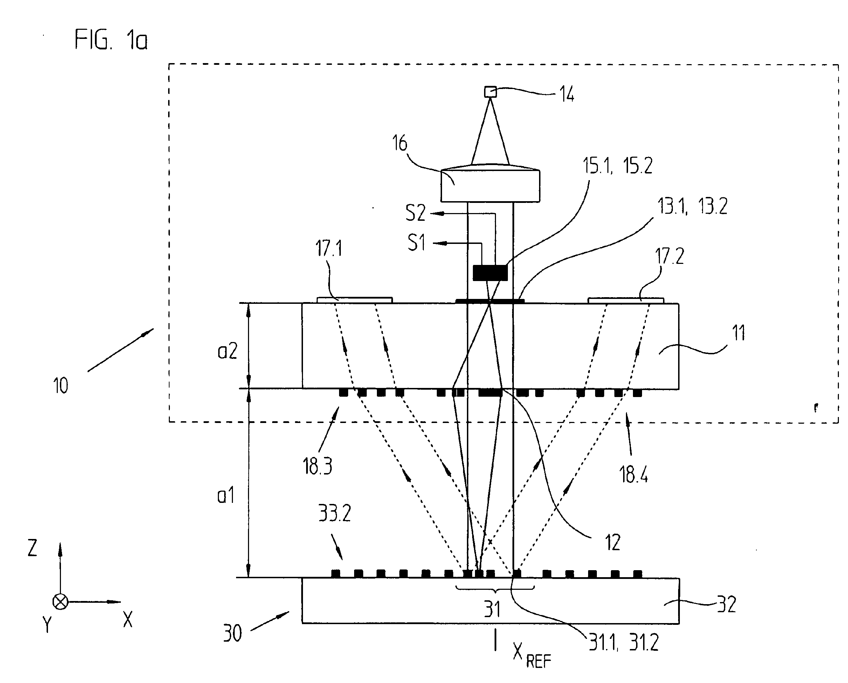

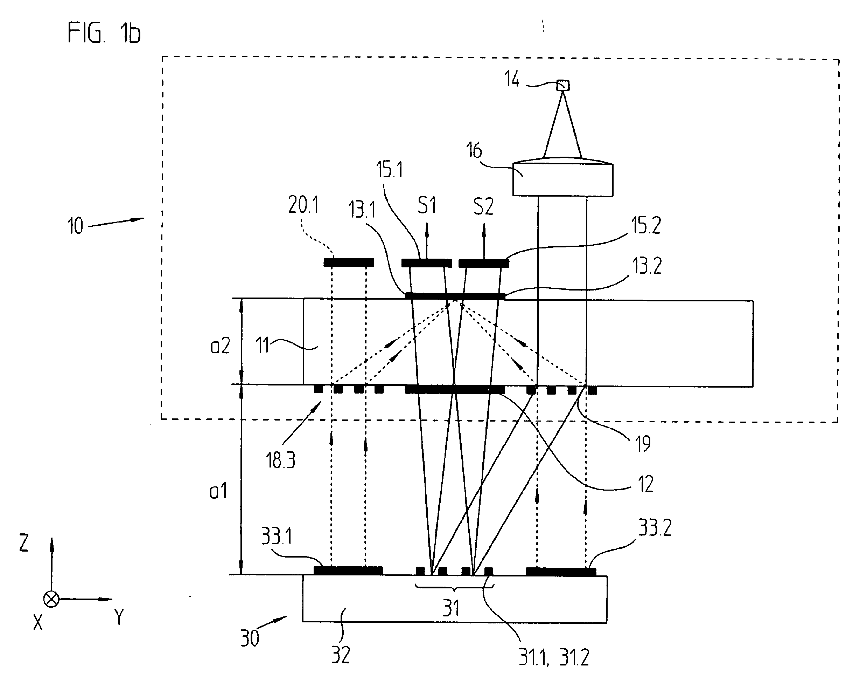

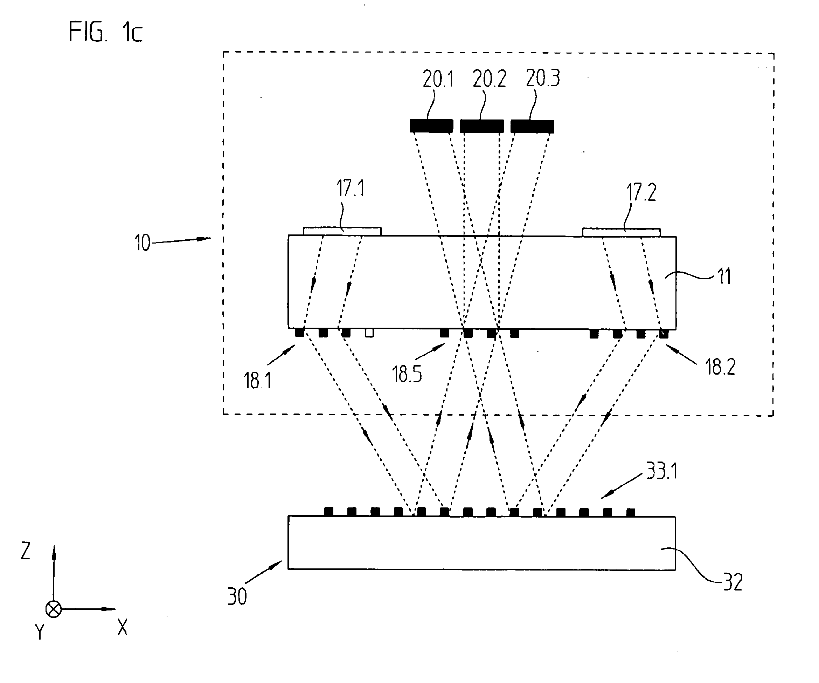

Anhand der Figuren 1 - 5 sei nachfolgend eine erste Ausführungsform der erfindungsgemäßen Positionsmesseinrichtung und insbesondere die Erzeugung eines Referenzimpulssignales RI mit derselbigen erläutert.

Die Figuren 1 a und 1b zeigen in stark schematisierter Form Teil-Abtaststrahlengänge zur Referenzimpulssignalerzeugung in einem ersten Ausführungsbeispiel einer erfindungsgemäßen Positionsmesseinrichtung in verschiedenen Ansichten. Figur 1c zeigt schematisierte Teil-Abtaststrahlengänge zur Erzeugung der Inkrementalsignale in dieser Positionsmesseinrichtung.

In den Figuren 1a - 1c sowie in den nachfolgenden ähnlichen Figuren zu alternativen Ausführungsformen sind die Teil-Abtaststrahlengänge zur Referenzimpulssignalerzeugung jeweils durchgezogen dargestellt, die Teil-Abtaststrahlengänge zur Erzeugung der Inkrementalsignale hingegen jeweils strichliniert.

Die dargestellte Variante einer erfindungsgemäßen optischen Positionsmesseinrichtung umfasst eine Reflexions-Maßverkörperung 30 sowie eine hierzu in mindestens einer Messrichtung x bewegliche Abtasteinheit 10. Die Reflexions-Maßverkörperung 30 und die Abtasteinheit 10 sind mit zwei zueinander beweglichen Objekten verbunden, beispielsweise Maschinenteilen. Über die Positionsmesseinrichtung werden Positionssignale bzgl. der Lage der beiden zueinander beweglichen Objekte erzeugt und einer - nicht dargestellten - Steuereinheit zugeführt. Diese nutzt die Positionsdaten in bekannter Art und Weise zu Steuerungszwecken. Die erfindungsgemäße Positionsmesseinrichtung kann hierbei sowohl bzgl. linearer als auch bzgl. rotatorischer Verschiebebewegungen ausgebildet werden.

Das dargestellte Ausführungsbeispiel einer erfindungsgemäßen Positionsmesseinrichtung liefert - wie nachfolgend erläutert - neben periodischen Inkrementalsignalen $INC_A$, $INC_B$ noch ein Referenzimpulssignal RI an mindestens einer bekannten Referenzposition $x_{REF}$ entlang der Messstrecke. Auf die derart bestimmte, bekannte Absolutposition kann dann die deutlich höher auflösende Inkrementalmessung nachfolgend in üblicher Art und Weise bezogen werden.

Zunächst sei die für die vorliegende Erfindung vorrangige Erzeugung des Referenzimpulssignals RI anhand der hierzu vorgesehenen Teil-Abtaststrahlengänge erläutert.

Die Reflexions-Maßverkörperung 30 umfasst neben einer oder mehreren sich in Messrichtung x erstreckenden Inkrementalteilungen 33.1, 33.2 ferner mindestens eine Referenzmarkierung 31 an einer definierten Referenzposition $x_{REF}$. Grds. kann natürlich auch vorgesehen werden, mehrere Referenzmarkierungen an verschiedenen Referenzpositionen anzuordnen, beispielsweise in Form sog. abstandscodierter Referenzmarkierungen etc..

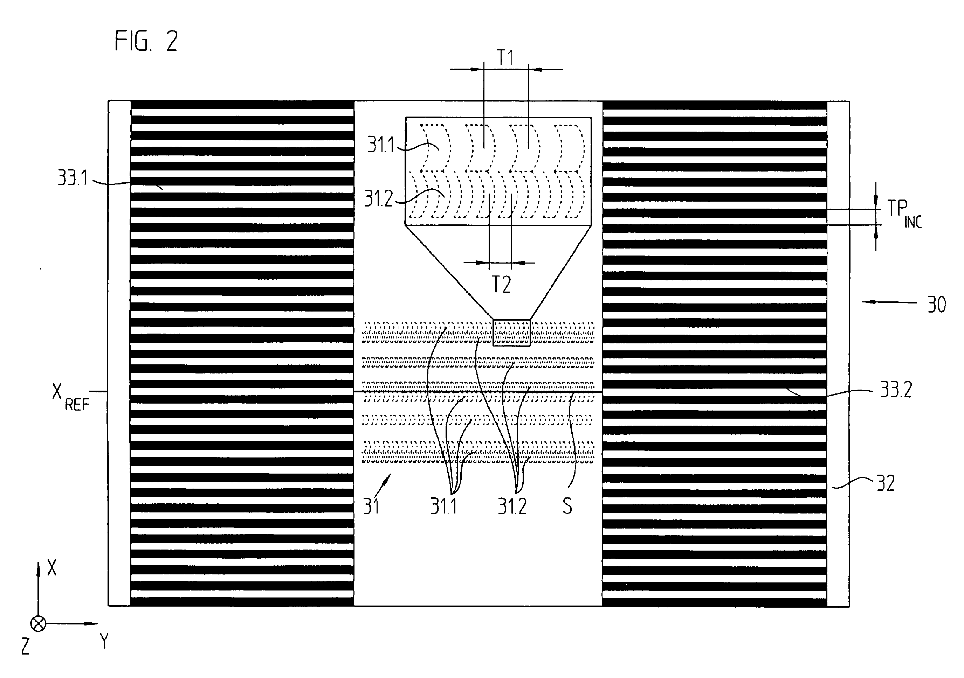

Wie aus der Draufsicht auf einen Teil der Reflexions-Maßverkörperung 30 in Figur 2 ersichtlich ist, sind in dieser Variante zur Erzeugung der Inkrementalsignale $INC_A$, $INC_B$ zwei parallele, identische Inkrementalteilungen 33.1, 33.2 auf einem Trägerkörper 32 angeordnet. Die beiden Inkrementalteilungen 33.1, 33.2 bestehen jeweils aus in Messrichtung x periodisch mit der Teilungsperiode $TP_{INC}$ angeordneten strichförmigen Teilungsbereichen unterschiedlicher optischen Eigenschaften. Beispielsweise kann es sich bei der Reflexions-Maßverkörperung 30 um Auflicht-Phasengitter handeln, die alternierende Teilbereiche mit unterschiedlichen phasenschiebenden Wirkungen auf die reflektierten Strahlenbündel. In einer möglichen Ausführungsform wird $TP_{INC} = 0.5\mu m$ gewählt. Die Teilungsbereiche erstrecken sich in der Ebene der Reflexions-Maßverkörperung 30 senkrecht zur Messrichtung x, d.h. in der angegebenen Richtung y (nachfolgend auch Strichrichtung genannt).

An der Referenzposition $x_{REF}$ ist zwischen den beiden Spuren für die Inkrementalteilungen 33.1, 33.2 eine Referenzmarkierung 31 angeordnet. Diese besteht wie die Inkrementalteilungen 33.1, 33.2 aus einer bestimmten Anordnung von Teilbereichen bzw. Strukturelementen 31.1, 31.2 mit unterschiedlichen Reflexionseigenschaften. Deren bevorzugte Ausgestaltung wird für das vorliegende Ausführungsbeispiel nachfolgend noch detailliert erläutert.

Auf Seiten der Abtasteinheit 10 sind im vorliegenden Beispiel eine Lichtquelle 14, z.B. eine Laserdiode, sowie eine Kollimationsoptik 16, mehrere Detektorelemente 15.1, 15.2 für die Referenzimpulssignal-Erzeugung, mehrere Detektorelemente 20.1, 20.2, 20.3 für die Inkrementalsignalerzeugung (Figur 1 c) sowie verschiedene weitere optische Elemente angeordnet. Die verschiedenen optischen Elemente zur Erzeugung der Referenzimpuls- und Inkrementalsignale RI, $INC_A$, $INC_B$ sind hierbei auf einer Abtastplatte 11 in der Abtasteinheit 10 angeordnet und werden anschließend ebenfalls noch im einzelnen beschrieben.

Es sei an dieser Stelle darauf hingewiesen, dass sich die Lichtquelle 14, die Kollimationsoptik 16 und die verschiedenen Detektorelemente 15.1, 15.2, 20.1, 20.2, 20.3 nicht unbedingt in der Abtasteinheit 10 bzw. in einem entsprechenden Gehäuse derselben befinden müssen. So wäre in alternativen Varianten der vorliegenden Erfindung grundsätzlich auch möglich, diese Komponenten in bekannter Art und Weise mittels Lichtwellenleitern der Abtasteinheit 10 zuzuordnen und die verschiedenen Elemente räumlich getrennt außerhalb der Abtasteinheit 10 zu platzieren.

Das nach der Kollimationsoptik 16 parallel-gerichtete Strahlenbündel wird von einem Aufspaltgitter 19 in einen Abtaststrahlengang (durchgezogene Berandungslinien in Fig. 1a - 1c) zur Erzeugung des Referenzimpulssignals RI und in einen Abtaststrahlengang (strichlinierte Berandungslinien in Fig. 1a - 1c) zur Erzeugung der Inkrementalsignale $INC_A$, $INC_B$ aufgespalten. Wie aus Figur 1b ersichtlich ist, bedeutet dies, dass das zur Referenzimpulssignal-Erzeugung abgespaltene Teilstrahlenbündel in den Bereich zwischen den beiden Inkrementalteilungen 33.1, 33.2 auf der Reflexions-Maßverkörperung 30 hin abgelenkt wird. Die Gitterkonstante des Aufspaltgitters 19 wird vorzugsweise so gewählt, dass im Fall des Norm-Abtastabstands zwischen Abtasteinheit 10 und Reflexions-Maßverkörperung 30 genau ein Bereich in der Mitte zwischen den beiden Inkrementalteilungen 33.1, 33.2 beleuchtet wird. Von diesem Bereich erfolgt eine Rückreflexion in Richtung der Abtasteinheit 10. In der Abtasteinheit 10 treffen die rückreflektierten Teilstrahlenbündel auf eine Abbildungsoptik 12, die an der Unterseite der Abtastplatte 11 angeordnet ist. Die Abbildungsoptik 12 kann in verschiedenen Formen auf der Abtastplatte 11 ausgebildet werden, etwa als einzelne Fresnel-Linse. Alternativ hierzu ist auch die Ausbildung der Abbildungsoptik 12 als Linsenarray möglich, das aus mehreren Einzellinsen besteht; hierzu wird im Verlauf der nachfolgenden Beschreibung noch detaillierter eingegangen.

Die Platzierung der Referenzmarkierung 31 zwischen den beiden Inkrementalteilungen 33.1, 33.2 bietet den Vorteil, dass sich im Fall einer eventuellen Verdrehung von Reflexions-Maßverkörperung 30 und Abtasteinheit 10 um die z-Achse keine (verfälschende) Veränderung der Lage des Referenzimpulssignales RI relativ zu den Inkrementalsignalen $INC_A$, $INC_B$ ergibt.

Die Abbildungsoptik 12 ist optisch dergestalt dimensioniert, dass deren bildseitige Brennebene mit der Oberseite der Abtastplatte 11 bzw. einer dort befindlichen Blendenebene zusammenfällt, in der zwei Blendenstrukturen 13.1, 13.2 mit jeweils mehreren Blendenöffnungen angeordnet sind. Den Blendenstrukturen 13.1, 13.2 nachgeordnet sind zwei Detektorelemente 15.1, 15.2 in der Abtasteinheit 10, die zur Erfassung des durch die Blendenöffnungen transmittierten Lichts und damit zur Erzeugung des Referenzimpulssignales RI herangezogenen Signale S1, S2 dienen. Objektseitig liegt der von der Abbildungsoptik 12 abgebildete Fokus auf Höhe der halben Entfernung zwischen dem neutralen Drehpunkt und der Oberfläche der Reflexions-Maßverkörperung 30. Das heißt, die Abbildungsoptik 12 ist objektseitig auf eine Ebene bzw. einen Punkt abgestimmt, der sich aus der Lage des systembedingten neutralen Drehpunktes ergibt. Als neutraler Drehpunkt ist hierbei derjenige Punkt definiert, um den die Abtasteinheit 10 oder die Reflexions-Maßverkörperung 30 verkippt werden kann, ohne dass Fehler bei der Positionsbestimmung resultieren, d.h. Fehler bei der Erzeugung des Referenzimpulssignals RI bzw. der Inkrementalsignale $INC_A$, $INC_B$. Der neutrale Drehpunkt kann hierbei je nach Systemgegebenheiten in unterschiedlichen Ebenen zu liegen kommen, also sowohl in der Maßverkörperungsebene als auch unterhalb bzw. oberhalb der Maßverkörperungsebene.

Maßgeblich für die erfindungsgemäße Erzeugung des Referenzimpulssignals RI ist nunmehr die gewählte Ausgestaltung der Referenzmarkierung 31 auf Seiten der Reflexions-Maßverkörperung 30. Die entsprechende Ausgestaltung derselben ist verantwortlich dafür, dass an der Referenzposition $x_{REF}$ ein Referenzimpulssignal RI sicher detektierbar ist. Zur näheren Erläuterung der Referenzmarkierung 31 sei insbesondere auf die Figur 2 verwiesen, die eine Draufsicht auf die Reflexions-Maßverkörperung 30 im Bereich der Referenzposition $x_{REF}$ zeigt.

Die erfindungsgemäß ausgebildete Referenzmarkierung 31 weist im Bereich der Referenzposition $x_{REF}$ zwischen den beiden Inkrementalteilungen 33.1, 33.2 einen ersten Satz von Strukturelementen 31.1 sowie einen zweiten Satz von Strukturelementen 31.2 in bestimmten geometrischen Anordnungen auf. Die Strukturelemente 31.1, 31.2 beider Sätze sind in der Ebene der Reflexions-Maßverkörperung 30 senkrecht zur Messrichtung x, d.h. in der angegebenen Strichrichtung y, periodisch mit einer ersten Transversalperiodizität T1 bzw. einer zweiten Transversalperiodizität T2 angeordnet. Die Transversalperiodizitäten T1, T2 der beiden Sätze erster und zweiter Strukturelemente 31.1, 31.2 unterscheiden sich hierbei voneinander, wie auch aus Figur 2 ersichtlich ist; beispielsweise kann T1 = 2.4μm und T2 = 2.0μm gewählt werden.

Im dargestellten Ausführungsbeispiel der Figur 2 umfasst die Referenzmarkierung 31 insgesamt vier separate Sätze erster Strukturelemente 31.1 sowie vier separate Sätze zweiter Strukturelemente 31.2, die in Messrichtung x parallel zueinander benachbart angeordnet sind. In Messrichtung x sind demzufolge insgesamt acht Sätze von Strukturelementen 31.1, 31.2 angeordnet. Die Anordnung der jeweils vier Sätze erster und zweiter Strukturelemente 31.1, 31.2 erfolgt in Messrichtung x spiegelsymmetrisch zu einer Symmetrieachse S, die senkrecht zur Messrichtung x in der Ebene der Reflexions-Maßverkörperung 30 orientiert ist. Die Symmetrieachse S befindet sich im vorliegenden Beispiel genau an der Referenzposition $x_{REF}$. Strukturelemente 31.1, 31.2 unterschiedlicher Transversalperiodizität T1, T2 liegen sich bzgl. der Symmetrieachse S spiegelsymmetrisch gegenüber.

Wie aus der Ausschnittsvergrößerung der Referenzmarkierung 31 in Figur 2 ersichtlich ist, besitzen die einzelnen Strukturelemente 31.1, 31.2 in diesem Beispiel jeweils eine Querschnittsform, die sich aus zwei in Quererstreckungsrichtung y parallelen Berandungsgeraden und zwei in Längserstreckungsrichtung x gekrümmten, parallelen Berandungslinien zusammensetzt. Aus der gewählten Querschnittsform resultiert die später noch detailliert erläuterte optische Wirkung dieser Elemente. Sätze mit ersten und zweiten Strukturelementen 31.1, 31.2 unterscheiden sich i.w. durch die unterschiedliche Transversalperiodizität T1, T2, mit der die einzelnen Strukturelemente 31.1, 31.2 in der Richtung y periodisch angeordnet sind.

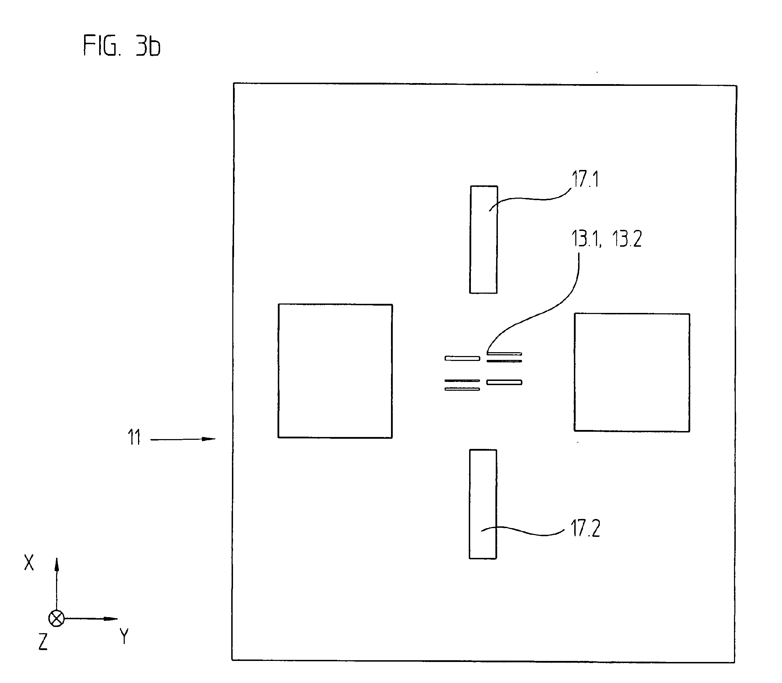

Treffen nunmehr die zur Erzeugung des Referenzimpulssignals RI genutzten Teilstrahlenbündel, vom Aufspaltgitter 19 der Abtasteinheit 10 kommend, auf den Bereich der Referenzmarkierung 31 mit den Sätzen erster und zweiter Strukturelemente 31.1, 31.2, so werden die Teilstrahlenbündel aufgrund der unterschiedlichen Transversalperiodizitäten T1 und T2 in den verschiedenen Sätzen auch unterschiedlich in y-Richtung in der y-z-Ebene abgelenkt. Der jeweilige Ablenkwinkel hängt hierbei in bekannter Art und Weise unmittelbar mit der jeweiligen Transversalperiodizität T1, T2 zusammen. Über die Abbildungsoptik 12 in der Abtasteinheit 10 werden die zurückreflektierten Teilstrahlenbündel aus dem Bereich der Referenzmarkierung 31 in die Blendenebene abgebildet. Die dort angeordneten zwei Blendenstrukturen 13.1, 13.2 sind in Bezug auf die geometrische Anordnung der jeweils mehreren Blendenöffnungen auf die geometrische Anordnung der Sätze von ersten und zweiten Strukturelementen 31.1, 31.2 der Referenzmarkierung 31 abgestimmt. Das heißt, die Öffnungen einer ersten Blendenstruktur 13.1 sind auf die Anordnung der Sätze erster Strukturelemente 31.1 abgestimmt und die Öffnungen einer zweiten Blendenstruktur 13.2 sind auf die Anordnung der Sätze zweiter Strukturelemente 31.2 abgestimmt. Dies ist aus dem Vergleich der Figuren 2 und 3b ersichtlich. So sind in der Referenzmarkierung gemäß dem dargestellten Beispiel in Figur 2 vier Sätze erster Strukturmarkierungen 31.1 vorgesehen, denen die darauf abgestimmte erste Blendenstruktur 13.1 mit den vier angedeuteten Blendenöffnungen zugeordnet ist; analog sind den vier Sätzen zweiter Blendenstrukturelemente 31.2 die vier darauf abgestimmten Blendenöffnungen der zweiten Blendenstruktur 13.2 zugeordnet; selbstverständlich kann auch eine andere Anzahl von Blendenöffnungen sowie Sätzen von Strukturelementen gewählt werden. Bei der Wahl der Positionen der Blendenöffnungen muss natürlich noch der aufgrund der Abbildungsoptik 12 resultierende Abbildungsmaßstab m berücksichtigt werden.

Eine derartige Abstimmung hat zur Folge, dass im Bereich benachbart zur Referenzposition $x_{REF}$ die beiden den Blendenstrukturen 13.1, 13.2 nachgeordneten Detektorelemente 15.1, 15.2 jeweils ein Signalmaximum der darüber erfassten Signale S1, S2 detektieren können.

Wie bereits oben angedeutet kann die Abbildungsoptik alternativ auch als Linsenarray ausgebildet werden, das mehrere Einzellinsen umfasst. Dadurch können in Strichrichtung y längere Sätze mit Strukturelementen in die Blendenebene abgebildet werden. Dies hat Vorteile in Bezug auf die Signalstärke der detektierten Signale. In diesem Fall wird jeweils eine Teilsequenz eines Satzes mit Strukturelementen durch eine Einzellinse abgebildet. Auch in dieser Variante ist jedem Satz von Strukturelementen 31.1, 31.2 eine Blendenöffnung der Blendenstruktur 13.1, 13.2 definiert zugeordnet. Die Positionen der Blendenöffnungen ergeben sich abgestimmt wiederum aus der Abbildung der Sätze von Strukturelementen 31.1, 31.2 über die Abbildungsoptik 12 mit dem Abbildungsmaßstab m.

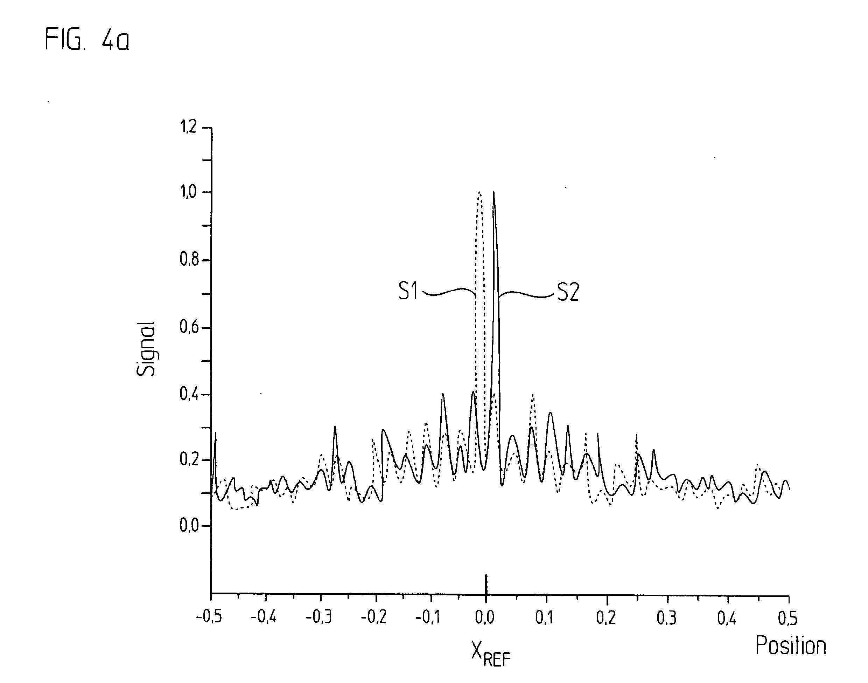

Die an den Detektorelementen 15.1, 15.2 anliegenden Signale S1, S2 im Bereich um die Referenzposition $x_{REF}$ sind in Figur 4a dargestellt. Wie aus diesen Signalen S1, S2 letztlich das interessierende Referenzimpulssignal RI erzeugbar ist, wird im Verlauf der nachfolgenden Beschreibung noch detailliert erläutert.

Zur Erzeugung der Inkrementalsignale $INC_A$, $INC_B$ sei nunmehr insbesondere auf die Figur 2 sowie die Figuren 1a und 1b verwiesen, in denen die Teil-Abtaststrahlengänge für die Inkrementalsignalerzeugung jeweils strichliniert angedeutet sind.

Hierbei gelangen die von der Lichtquelle 14 emittierten Strahlenbündel für die Inkrementalsignalerzeugung nach dem unabgelenkten Passieren des Aufspaltgitters 19 auf die Inkrementalteilung 33.2 auf der Reflexionsmaßverkörperung 32. Von dort erfolgt eine Rückreflexion von in der x-z-Ebene aufgespaltenen Teilstrahlenbündel in Richtung der Abtasteinheit 10, wo die auf der Unterseite der Abtastplatte 11 angeordneten Abtastgitter 18.3, 18.4 durchlaufen werden (Fig. 1a). Diese lenken die Teilstrahlenbündel in y-Richtung ab, so dass die Teilstrahlenbündel auf zwei Reflektorelemente 17.1, 17.2 auf der Oberseite der Abtastplatte 11 auftreffen (Fig. 1 b). Von den Reflektorelementen 17.1, 17.2 erfolgt eine Rückreflexion der beiden Teilstrahlenbündel in Richtung weiterer Abtastgitter 18.1, 18.2 auf der Unterseite der Abtastplatte 11, die die Teilstrahlenbündel dann wieder in Richtung der zweiten Inkrementalteilung 33.1 auf der Reflexions-Maßverkörperung 30 zurücklenken (Fig. 2). Von der Inkrementalteilung 33.1 erfolgt eine nochmalige Rückreflexion der Teilstrahlenbündel in Richtung der Abtasteinheit 10. Dort gelangen die beiden zurückreflektierten Teilstrahlenbündel auf ein Vereinigungsgitter 18.5 auf der Unterseite der Abtastplatte 11. Vom Vereinigungsgitter 18.5 propagieren schließlich drei Paare interferierender Teilstrahlenbündel in Richtung dreier nachgeordneter Detektorelemente 20.1, 20.2, 20.3, die zur Erfassung von drei um je 120° phasenverschobenen periodischen Signalen dienen, die verschiebungsabhängig moduliert werden. Diese werden schließlich noch in bekannter Art und Weise über eine - nicht dargestellte - nachgeordnete Elektronik in zwei um 90° phasenverschobene Inkrementalsignale $INC_A$, $INC_B$ umgewandelt. Im Zusammenhang mit der Inkrementalabtastung sei im übrigen auch auf die DE 102006042743.2 der Anmelderin verwiesen.

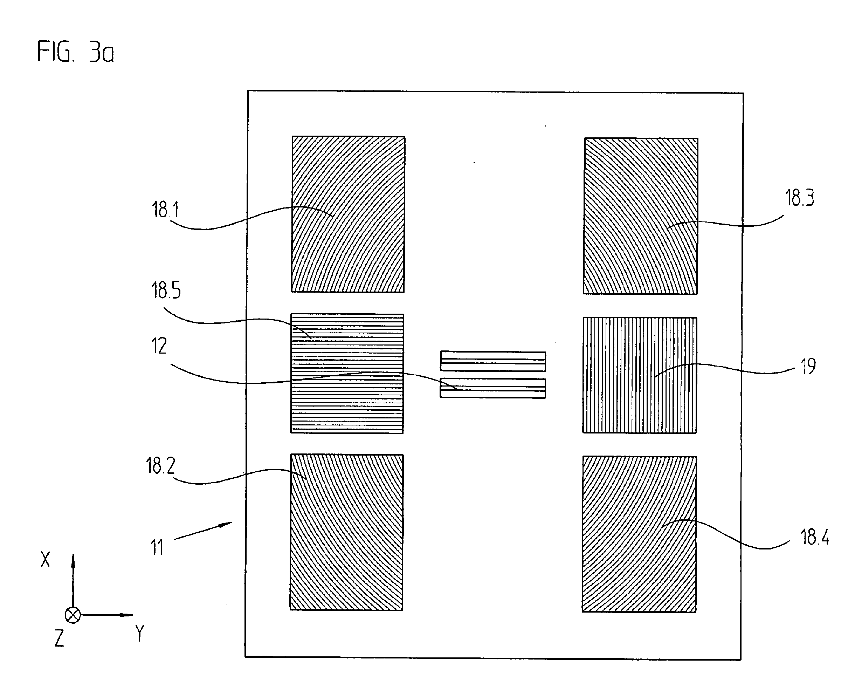

Die Anordnung der verschiedenen optischen Elemente für die Erzeugung des Referenzimpulssignals RI als auch der Inkrementalsignale $INC_A$, $INC_B$ auf der Ober- und Unterseite der Abtastplatte 11 ist in den Figuren 3a und 3b dargestellt.

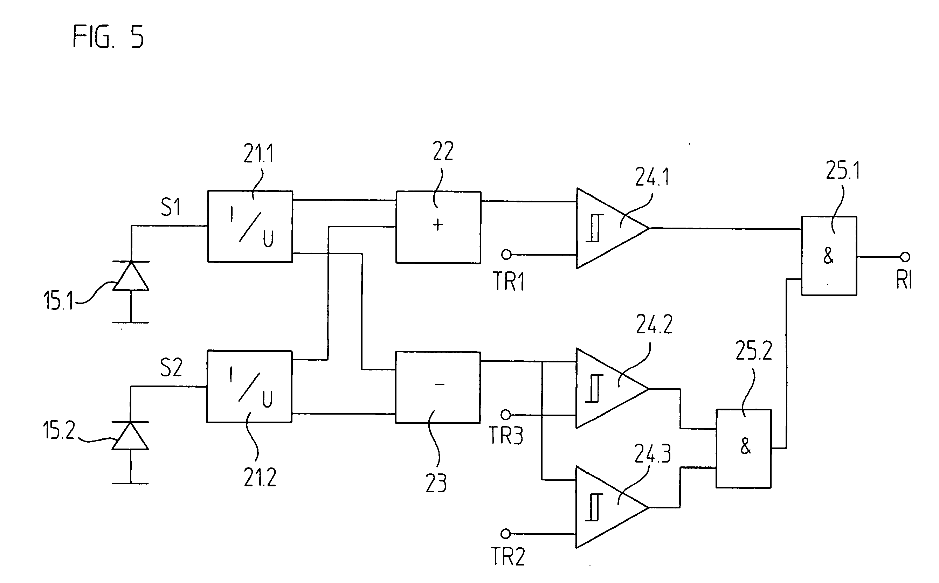

Wie bereits oben angedeutet werden im Bereich der Referenzposition $x_{REF}$ über die Detektorelemente 15.1, 15.2 die Signale S1, S2 erzeugt, wie sie in Fig. 4a dargestellt sind. Die Breite der Signale S1, S2 mit etwa 15µm ist jedoch für ein Referenzimpulssignal RI noch nicht hinreichend schmal genug, insbesondere wenn wie vorab beschrieben hochauflösende Inkrementalsignale $INC_A$, $INC_B$ mit Signalperioden von z.B. 0.5µm genutzt werden. Es ist hierbei grundsätzlich wünschenswert, ein Referenzimpulssignal RI ausgangsseitig zur Verfügung zu haben, welches im Bereich der Referenzposition $x_{REF}$ eine Breite besitzt, die der Breite der erzeugten Inkrementalsignale $INC_A$, $INC_B$ entspricht. Aus diesem Grund ist über die in Figur 5 dargestellte Schaltungsanordnung eine Weiterverarbeitung der Signale S1, S2 im vorliegenden Ausführungsbeispiel vorgesehen, die nachfolgend erläutert wird.

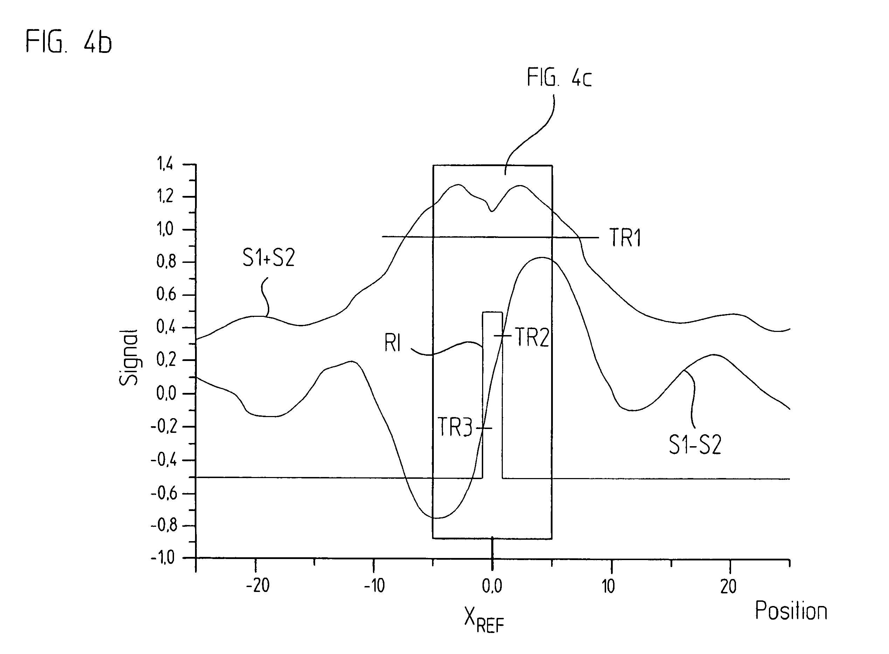

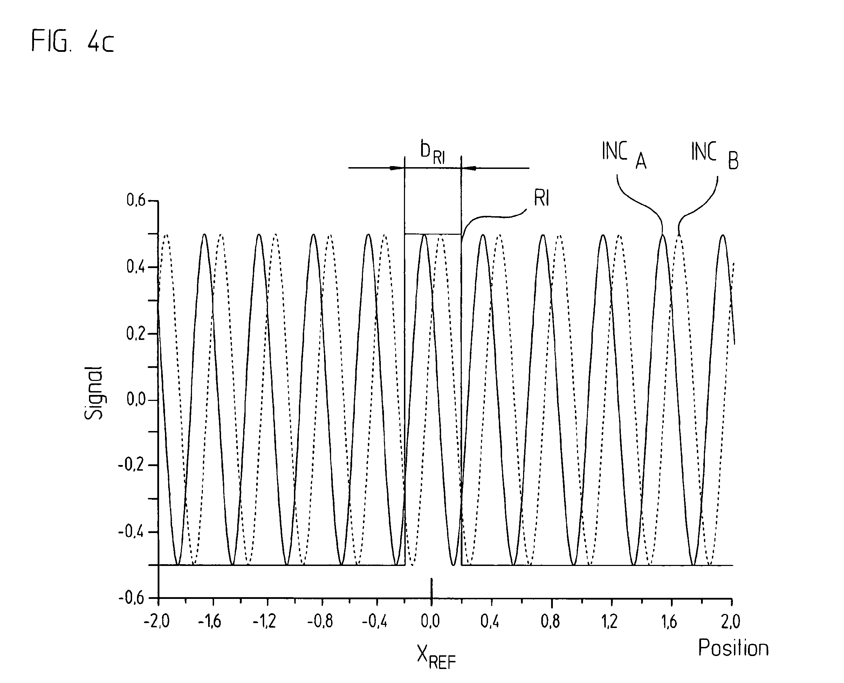

Die Signale S1, S2 an den Detektorelementen 15.1, 15.2 werden hierbei zunächst Strom-Spannungs-Wandlern 21.1, 21.2 zugeführt. Über die nachgeordneten Summen- und Differenzbildungselemente 22, 23 wird anschließend ein Summensignal S1+S2 sowie ein Differenzsignal S1-S2 gebildet; die zugehörigen Summen- und Differenzsignale S1+S2, S1-S2 sind im Bereich der Referenzposition $x_{REF}$ in Fig. 4b dargestellt. Das Summensignal S1+S2 wird anschließend einem ersten Komparatorelement 24.1 zugeführt, an dessen anderem Eingang das Referenzsignal bzw. die Triggerschwelle TR1 anliegt. Das Differenzsignal S1-S2 wird einem zweiten und dritten Komparatorelement 24.2, 24.3 zugeführt, an deren anderen Eingängen die Triggerschwellen TR3 und TR2 als Referenzsignale anliegen. In Figur 4b ist die Lage der verschiedenen Triggerschwellen TR1, TR2 und TR3 in Bezug auf das Summen- und Differenzsignal S1+S2, S1-S2 dargestellt. Das Ausgangssignal des ersten Komparatorelements 24.1 wird anschließend einem ersten Eingang eines UND-Verknüpfungselements 25.1 zugeführt. Dessen zweitem Eingang wird das Ausgangssignal eines zweiten UND-Verknüpfungselements 25.2 zugeführt, letzterem wurden die Ausgangssignale der zweiten und dritten Komparatorelemente 24.2, 24.3 zugeführt. Bei der angegebenen Wahl der Triggerschwellen TR1, TR2, TR3 und den erfolgenden logischen UND-Verknüpfungen resultiert am Ausgang des Verknüpfungselements 25.1 das gewünschte Referenzimpulssignal RI, das eine Breite $b_{RI}$ = 0.5µm besitzt, die der Breite $b_{INC}$ der erzeugten Inkrementalsignale $INC_A$, $INC_B$ entspricht, wie dies in Fig. 4c dargestellt ist.

Nachfolgend sei nunmehr auf weitere Details zur vorteilhaften Ausgestaltung der Referenzmarkierung 31 auf Seiten der Reflexions-Maßverkörperung 30 eingegangen. Über die nachfolgend erläuterten Maßnahmen lässt sich insbesondere sicherstellen, dass die Lage des neutralen Drehpunkts bei der Erzeugung des Referenzimpulssignals RI an die Lage des neutralen Drehpunktes bei der Inkrementalsignal-Erzeugung angepasst werden kann. Wie bereits eingangs erwähnt, stellt dies eine wichtige Maßnahme zur Vermeidung von Fehlmessungen bei einer eventuellen Verkippung von Abtasteinheit 10 und Reflexions-Maßverkörperung 30 dar.

Zu diesem Zweck ist vorgesehen, die bereits oben erwähnten Strukturelemente 31.1, 31.2 der Referenzmarkierung 31 als diffraktive optische Elemente bzw. diffraktive Strukturelemente auszubilden, die in Messrichtung x optisch wie eine Zylinderlinse mit einer bestimmten Brennweite f wirken und demzufolge in Messrichtung x einen virtuellen oder reellen Brennpunkt im Abstand der Brennweite f von der Reflexions-Maßverkörperung besitzen. In der y-z-Ebene besitzen die Strukturelemente 31.1, 31.2 eine optische Wirkung dergestalt, dass diese als Gitter mit der Transversalperiode T1 oder T2 fungieren.

Vorzugsweise entspricht die gewählte Brennweite f der Strukturelemente 31.1, 31.2 dem halben Abstand des neutralen Drehpunktes der Inkrementalsignal-Abtastung von der Reflexions-Maßverkörperung 30, wenn dieser systembedingt ober- oder unterhalb der Reflexions-Maßverkörperung 30 liegt. Auf diese Art und Weise kann die Lage des neutralen Drehpunkts der Referenzimpulssignal-Erzeugung an die Lage des neutralen Drehpunkts der Inkrementalsignal-Erzeugung angepasst werden. Es lassen sich somit bei einer eventuellen Verkippung von Abtasteinheit 10 und Reflexions-Maßverkörperung 30 andernfalls resultierende Fehler bei der Positionsmessung vermeiden.

Weiterhin ist vorgesehen, die Abbildungsoptik 12 in der Abtasteinheit 10 objektseitig an die Lage der Brennebene der Strukturelemente 31.1, 31.2 anzupassen. Diese Brennebene wird über die Abbildungsoptik 12 in die Blendenebene abgebildet, in der die Blendenstrukturen 13.1, 13.2 angeordnet sind. Diese Anforderungen lassen sich durch die Phasenfunktion der Abbildungsoptik 12 folgendermaßen charakterisieren:

$$P = \frac{2\pi}{\lambda_D}\left(\sqrt{x^2 + (a_1 \pm f)^2} + n\sqrt{x^2 + a_2^2}\right) \qquad \text{(Gl. 1)}$$

mit:

$\lambda_D$ := Wellenlänge der verwendeten Lichtquelle

x := Koordinate in Messrichtung

$a_1$ := Abstand zwischen Maßverkörperungsebene und Abbildungsoptik

$a_2$ := Abstand zwischen Abbildungsoptik und Blendenebene

n := Brechungsindex der Abtastplatte

f := Brennweiten der Strukturelemente der Referenzmarkierung

Die Phasenfunktion beschreibt hierbei die Geometrie der Abbildungsoptik 12 in Form der Höhenlinien dieses Elements.

Der Abbildungsmaßstab m der Abbildungsoptik 12 wird vorzugsweise folgendermaßen gewählt:

$$m = -n\frac{(a_1 \pm f)}{a_2} \qquad \text{(Gl. 2)}$$

mit:

$a_1$ := Abstand zwischen Maßverkörperungsebene und Abbildungsoptik

$a_2$ := Abstand zwischen Abbildungsoptik und Blendenebene

n := Brechungsindex der Abtastplatte

f := Brennweiten der Strukturelemente der Referenzmarkierung

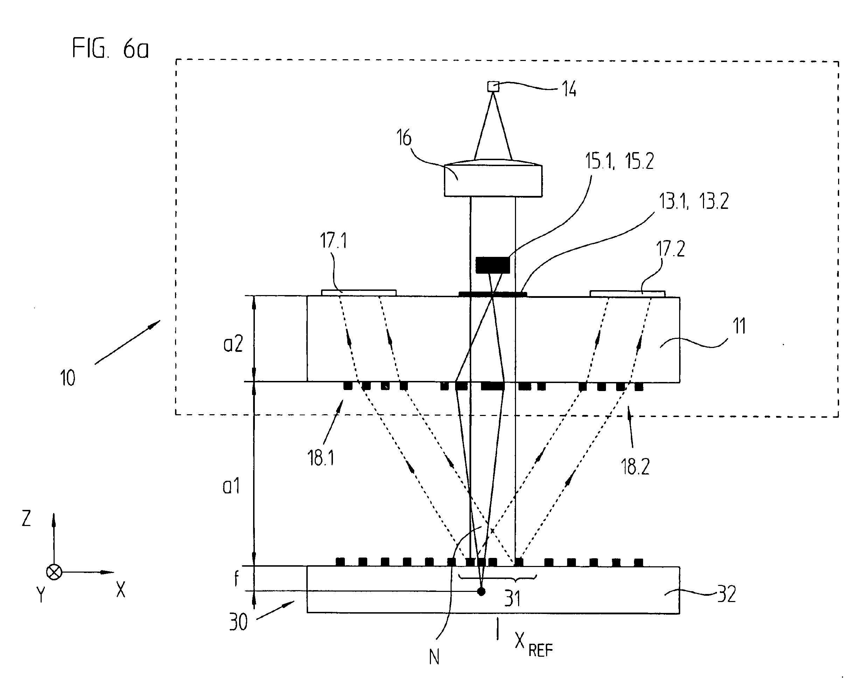

In Figur 6a ist der Fall schematisch dargestellt, dass der neutrale Drehpunkt N abtastungsbedingt deutlich unterhalb der Maßverkörperungsebene liegt. Die Brennweite f der Strukturelemente 31.1, 31.2 der Referenzmarkierung 31 wird wie ersichtlich gleich dem halben Abstand des neutralen Drehpunkts N von der Reflexions-Maßverkörperung 30 gewählt und auf die Lage der Brennebene die Abbildungsoptik 12 abgestimmt.

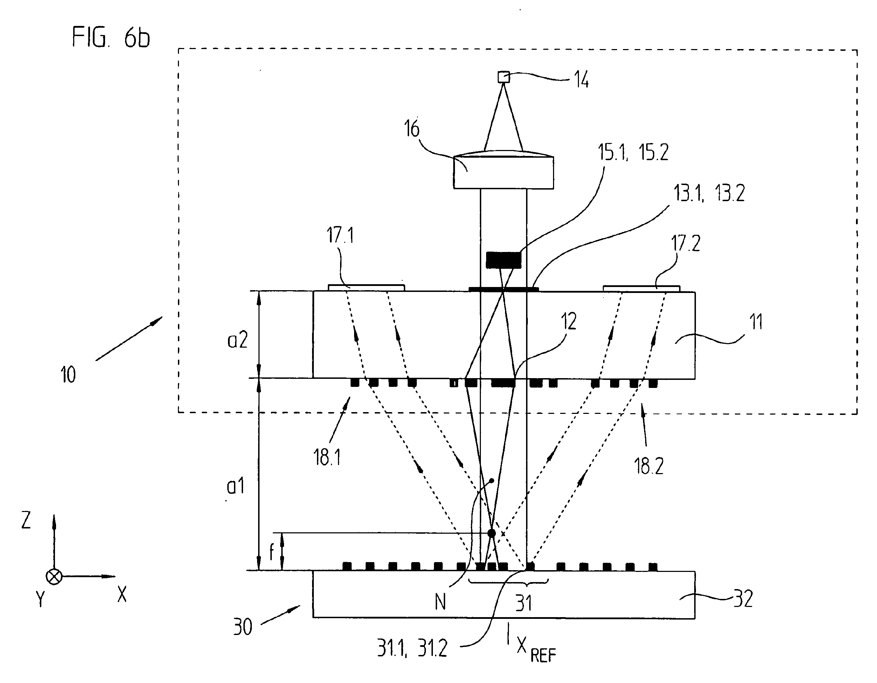

Figur 6b zeigt hingegen denjenigen Fall schematisch, bei dem der neutrale Drehpunkt N abtastungsbedingt deutlich oberhalb der Maßverkörperungsebene liegt. Die Brennweite f der Strukturelemente 31.1, 31.2 der Referenzmarkierung 31 wird wie ersichtlich ebenfalls gleich dem halben Abstand des neutralen Drehpunkts N von der Reflexions-Maßverkörperung 30 gewählt und wiederum auf die Lage der Brennebene die Abbildungsoptik 12 abgestimmt.

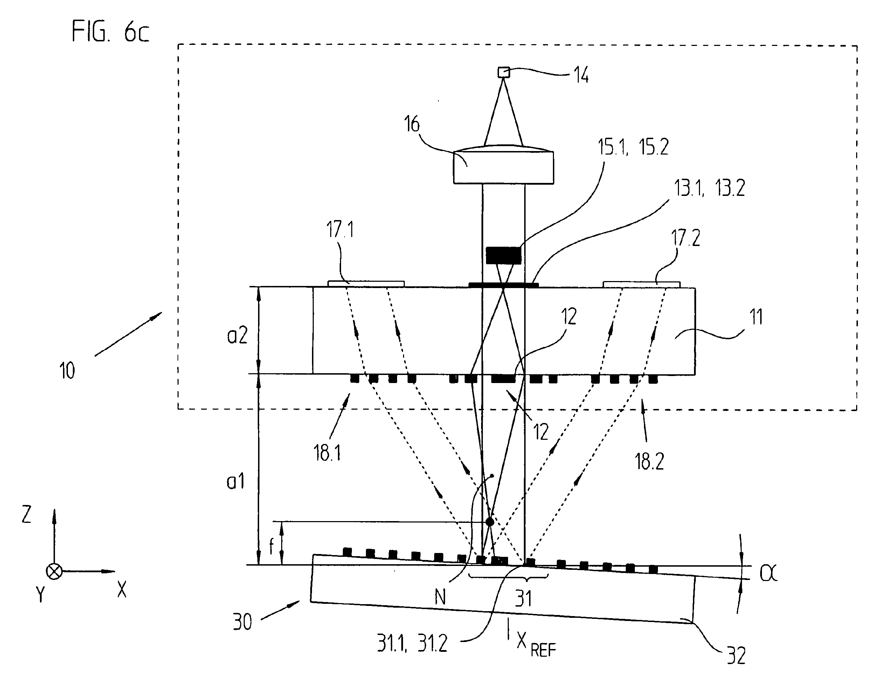

Im Fall der Situation gemäß Figur 6b resultiert bei einer eventuellen Verkippung der Reflexions-Maßverkörperung 30 um eine Achse in y-Richtung um den Winkelbetrag $\alpha$ (siehe Fig. 6c) eine Verschiebung des Fokus der Abbildungsoptik 12 in linearer Näherung um 2fα. Dies entspricht dem Verschiebungsbetrag der Inkrementalsignale, d.h. die Referenzsignalerzeugung und die Inkrementalsignalerzeugung werden gleichermaßen von der Verkippung beeinflusst.

Über die erfindungsgemäße Ausgestaltung der Referenzmarkierung lässt sich demzufolge der neutrale Drehpunkt der Referenzimpulssignalerzeugung mit dem neutralen Drehpunkt der Inkrementalsignalerzeugung in Deckung bringen. Beide Signale werden dann aufgrund der erfindungsgemäßen Maßnahmen von einer eventuellen Verkippung der Reflexions-Maßverkörperung gegenüber der Abtasteinheit gleichermaßen beeinflusst. Die oben beschriebene Lösung mit den Strukturelementen bestimmter optischer Wirkung erlauben die Anpassung der Lage des neutralen Drehpunkts der Referenzimpulssignalerzeugung besonders vorteilhaft für diejenigen Fälle, in denen der neutrale Drehpunkt der Inkrementalsignalerzeugung abtastprinzip-bedingt deutlich entfernt von der Maßverkörperungsebene zu liegen kommt.

Bei entsprechenden Abtastprinzipien ist darüber hinaus auch möglich, dass der neutrale Drehpunkt der Inkrementalsignalerzeugung relativ nah benachbart zur Maßverkörperungsebene zu liegen kommen kann. In diesem Fall erweist es sich als vorteilhaft einzelne Sätze von Strukturelementen nicht mit den erwähnten optischen Zylinderlinseneigenschaften auszugestalten, sondern die Strukturelemente in Bezug auf ihre Querschnittsform rechteckförmig auszubilden. Die gemischte Anordnung der Sätze mit den oben erläuterten Strukturelementen mit definierter optischer Wirkung einerseits und den Sätzen mit Strukturelementen ohne eine derartige optische Wirkung andererseits gestattet es, den neutralen Drehpunkt der Referenzimpulssignalerzeugung in die unmittelbare Nähe der Maßverkörperungsebene zu verlegen.

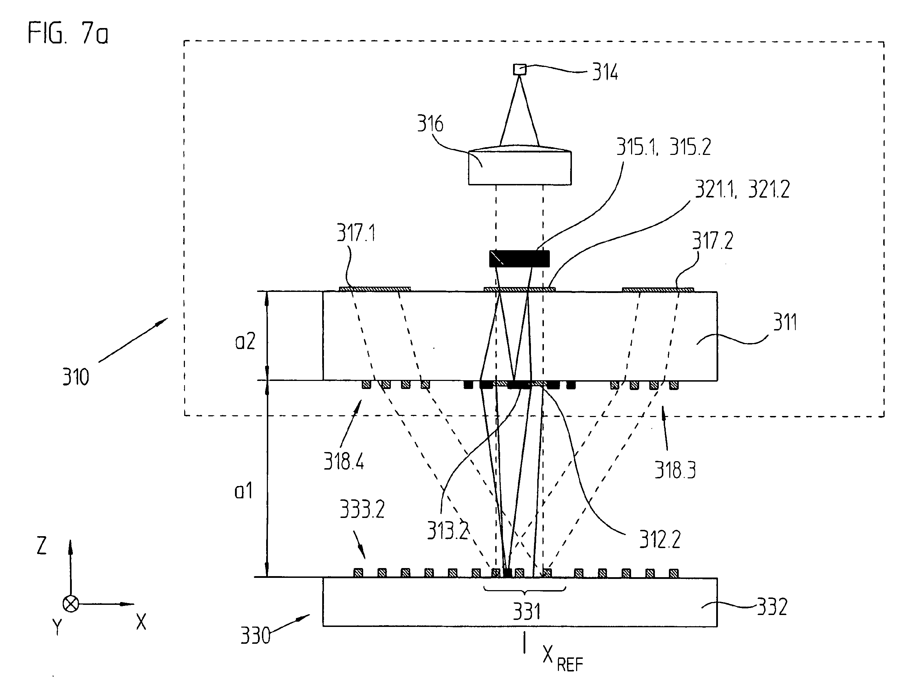

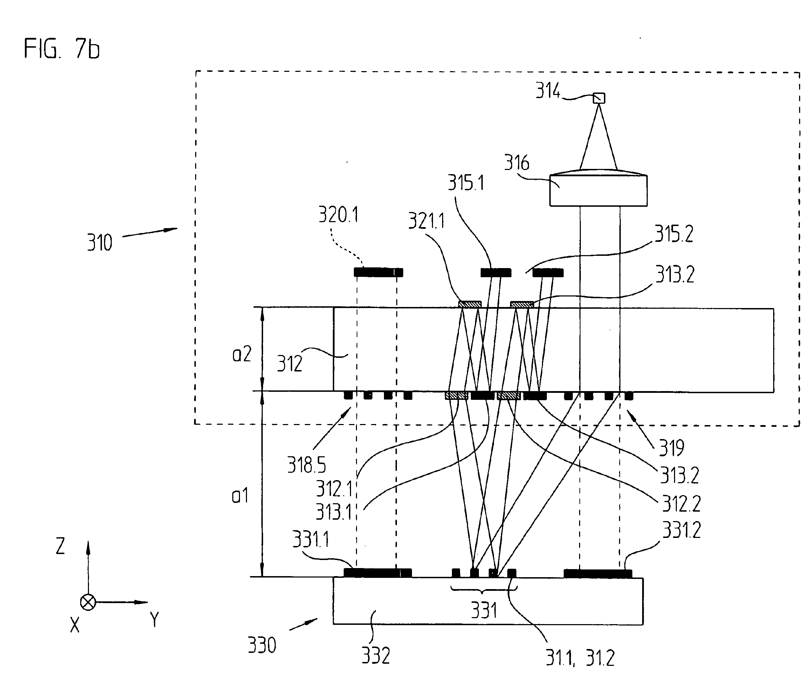

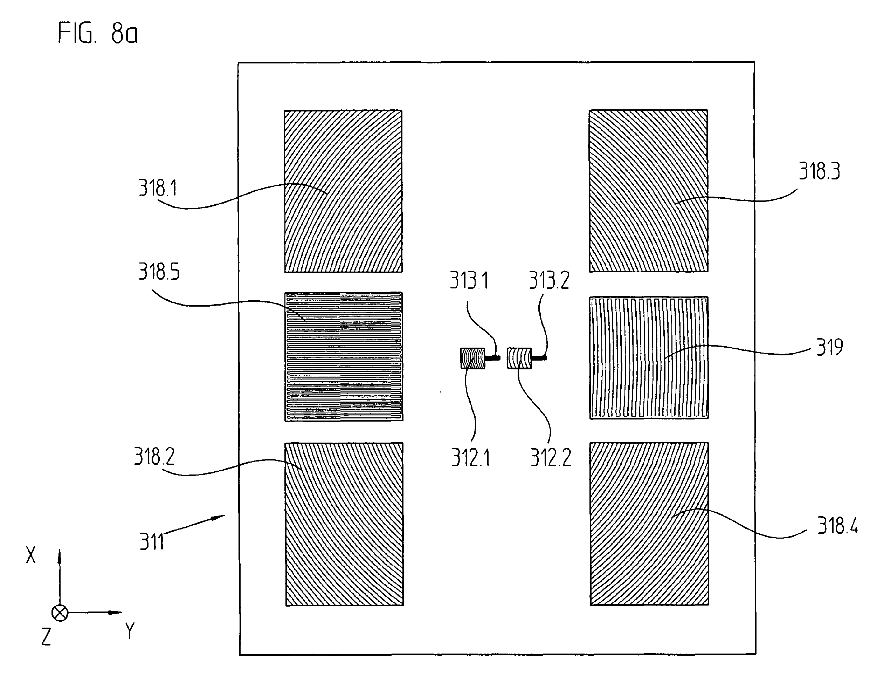

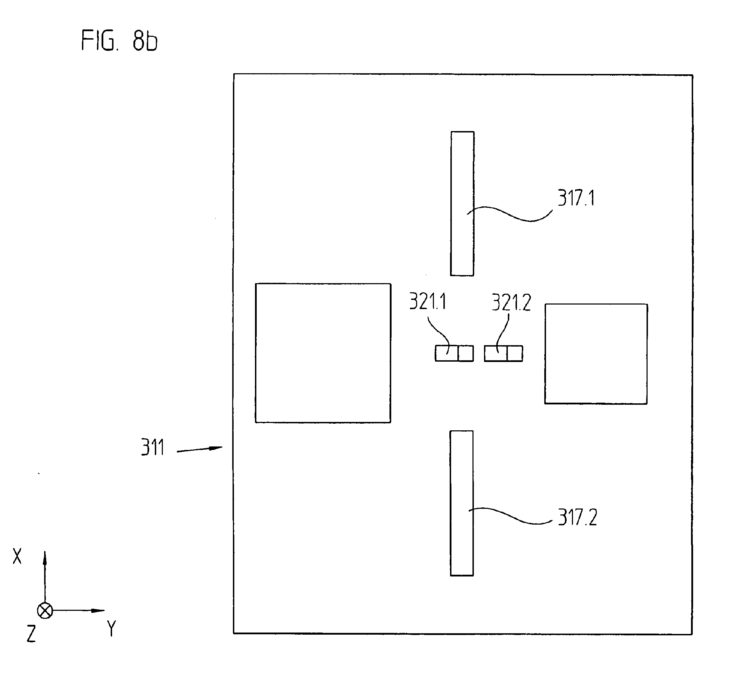

Anhand der Figuren 7a, 7b sowie 8a und 8b sei nachfolgend eine zweite Ausführungsform einer erfindungsgemäßen Positionsmesseinrichtung erläutert, die sich geringfügig von der oben beschriebenen ersten Variante unterscheidet. Die Fig. 7a und 7b zeigen analog zum vorherigen Beispiel wiederum Teil-Abtaststrahlengänge der zweiten Ausführungsform, in den Figuren 8a und 8b sind Ansichten der Unter- und Oberseite der Abtastplatte gezeigt. I.w. werden nachfolgend lediglich die Komponenten bzw. die Funktion derselben erläutert, die sich vom ersten Ausführungsbeispiel unterscheiden.

In den Figuren repräsentieren die durchgezogenen Teil-Abtaststrahlengänge diejenigen -Strahlengänge, die zur Erzeugung der Referenzimpulssignale dienen, die strichliniert dargestellten Teil-Abtaststrahlengänge repräsentieren die -Strahlengänge zur Inkrementalsignalerzeugung.

Im Unterschied zum ersten Beispiel ist zum einen konvergente Beleuchtung der Referenzmarkierung 331 auf der Reflexions-Maßverkörperung 330 vorgesehen. Es hat sich gezeigt, dass eine konvergente Beleuchtung der Referenzmarkierung 331 dahingehend Vorteile bietet, dass dann die Lage des neutralen Drehpunkts der Referenzimpulssignalerzeugung weitgehend unabhängig vom Abtastabstand zwischen der Reflexions-Maßverkörperung 330 und der Abtasteinheit 310 ist. In Figur 7b ist der konvergente Beleuchtungsstrahlengang zwischen dem Aufspaltgitter 319 und der Referenzmarkierung 331 angedeutet. Die Unabhängigkeit der Lage des neutralen Drehpunkts der Inkrementalsignalerzeugung vom Abtastabstand ist durch die gewählte Abtastung der Inkrementalteilungen 333.1, 333.2 zudem gewährleistet.

Um eine derartige konvergente Beleuchtung der Referenzmarkierung 331 zu gewährleisten wird im dargestellten Ausführungsbeispiel das Aufspaltgitter 319 in der Abtasteinheit 310 als abbildende Linse in Form eines diffraktives Strahlteilerelements mit gekrümmten Gitterlinien ausgebildet, wie dies auch in der Ansicht der Unterseite der Abtastplatte 311 in Fig. 8a angedeutet ist.

Die Ausbildung des Aufspaltgitters 319 als abbildende Linse hat im zweiten Ausführungsbeispiel eine weitere Modifikation im Abtaststrahlengang zur Folge. So ist es wichtig, dass das Aufspaltgitter 319 und die Blendenstrukturen 313.1, 313.2 auf der Abtastplatte 311 präzise zueinander ausgerichtet sind, damit die resultierenden Referenzimpulssignale auch bei einer Änderung des Abtastabstands lagemäßig unverändert bleiben. Um die präzise Ausrichtung dieser Komponenten technologisch bei der Herstellung einfacher realisieren zu können, ist beim zweiten Ausführungsbeispiel vorgesehen, dass die Blendenstrukturen 313.1, 313.2 und das Aufspaltgitter 319 im Unterschied zum ersten Ausführungsbeispiel auf der gleichen Seite der Abtastplatte 311 angeordnet werden. Fig. 8a zeigt die Unterseite der Abtastplatte 311, wo in y-Richtung benachbart zu den Komponenten der Abbildungsoptik 312.1, 312.2 jeweils Blendenstrukturen 313.1, 313.2 angeordnet sind.

Alternativ hierzu wäre es im übrigen auch möglich, die Blendenstrukturen und das Aufspaltgitter auf der Oberseite der Abtastplatte anzubringen.

Um die Blendenstrukturen 313.1, 313.2 im vorliegenden Beispiel auf der Unterseite der Abtastplatte 311 anordnen zu können, sind im Abtaststrahlengang im Unterschied zum vorherigen Beispiel ferner Reflektorelemente 321.1, 321.2 auf der Oberseite der Abtastplatte 311 angeordnet, wie dies etwa in Figur 8b dargestellt ist. Im Hinblick auf den Abtaststrahlengang hat dies zur Folge, dass - wie in Fig. 7b ersichtlich - die von der Referenzmarkierung 331 in Richtung Abtasteinheit 310 reflektierten Teilstrahlenbündel zunächst von der - in diesem Beispiel zweiteiligen - Abbildungsoptik 312.1, 312.2 über die zusätzlichen Reflektorelemente 321.1, 321.2 in die Ebene der Blendenstrukturen 313.1, 313.2 auf der Unterseite der Abtastplatte 311 abgebildet werden. In der Ansicht der Oberseite der Abtastplatte 311 in Fig. 8b sind die Reflektorelemente 321.1, 321.2 erkennbar. Von den Blendenstrukturen 313.1, 313.2 auf der Unterseite der Abtastplatte 311 erfolgt dann die Rückreflexion in Richtung der Detektorelemente 315.1, 315.2 zur Referenzimpulssignalerzeugung. Aufgrund dieses Strahlengangs sind die Blendenstrukturen 313.1, 313.2 in diesem Ausführungsbeispiel natürlich nicht als lichtdurchlässig/lichtundurchlässig ausgebildete Strukturen ausgebildet, sondern als reflektierend/nichtreflektierende Strukturen .

Der im Vergleich zum ersten Ausführungsbeispiel geringfügig modifizierte Abtaststrahlengang zur Erzeugung von Referenzimpulssignalen bedingt schließlich noch eine weitere Modifikation. So ist wie aus Fig. 7b ersichtlich nötig, dass über die Abbildungsoptik 312.1 bzw. 312.2 neben der abbildenden optischen Wirkung jeweils noch eine transversale Ablenkwirkung in y-Richtung erfolgt. Dies kann gewährleistet werden, wenn die Abbildungsoptik 312.1, 312.2 jeweils als Gitter-Linse-Struktur ausgebildet wird, wie dies schematisiert in der Ansicht der Unterseite der Abtastplatte 311 in Fig. 8a angedeutet ist.

Abgesehen von den erläuterten Modifikationen funktioniert in diesem Ausführungsbeispiel die Erzeugung der Referenzimpuls- und Inkrementalsignale wie im vorab erläuterten Beispiel.

Abschließend seien nunmehr noch zwei weitere Ausführungsbeispiele der erfindungsgemäßen Positionsmesseinrichtung beschrieben, bei denen im Vergleich zu den beiden erläuterten Ausführungsbeispielen zusätzliche Maßnahmen vorgesehen werden, um bestimmte Fehlereinflüsse zu kompensieren. So hat sich gezeigt, dass im Fall einer unerwünschten Änderung des Winkels, unter dem das von der Lichtquelle kommende Strahlenbündel relativ zur Abtastplatte in Richtung Referenzmarkierung propagiert, Fehler bei der Erzeugung des Referenzimpulssignals entstehen können.

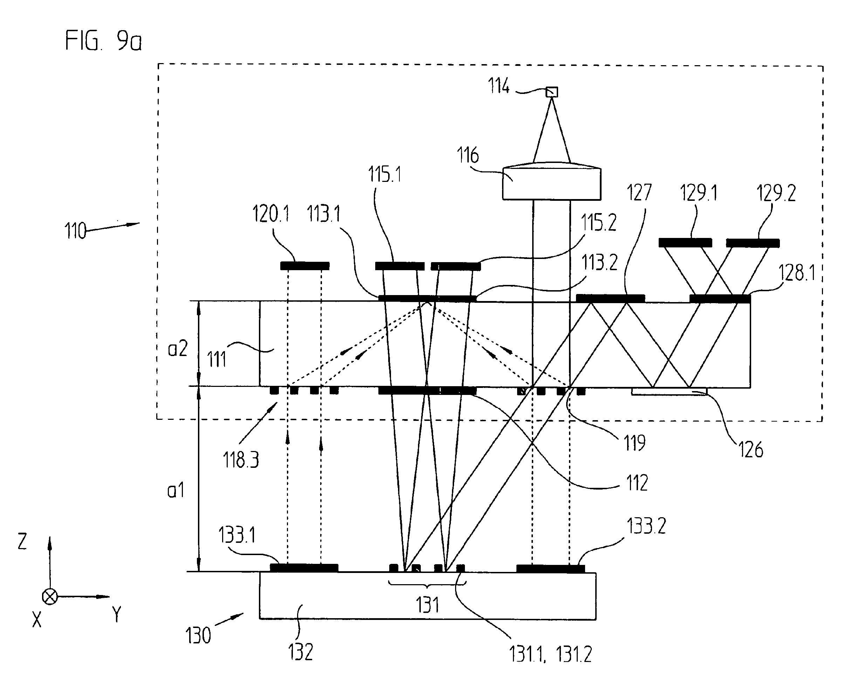

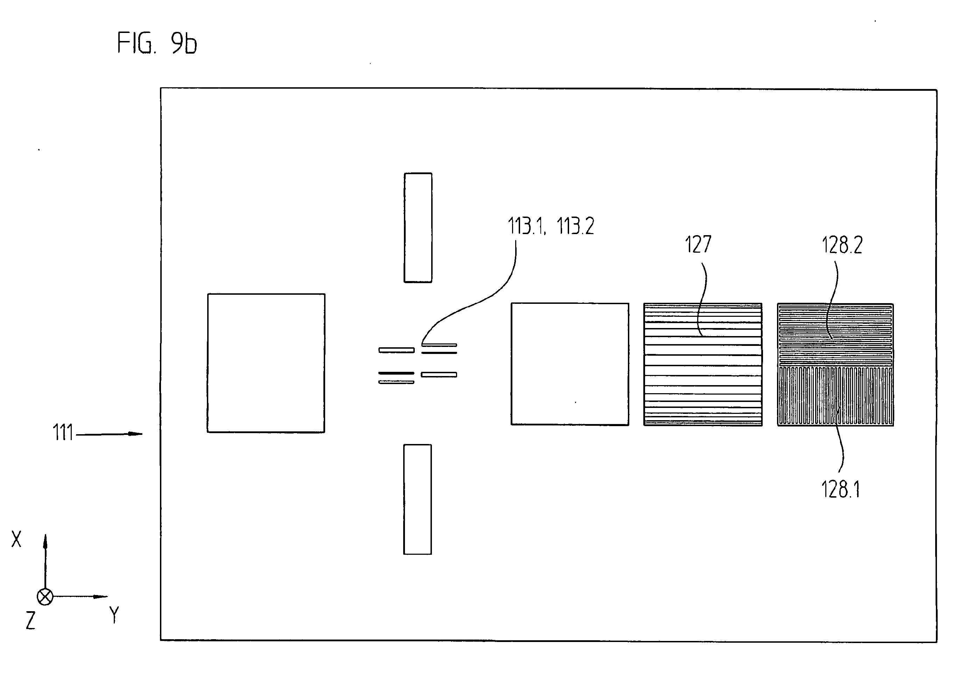

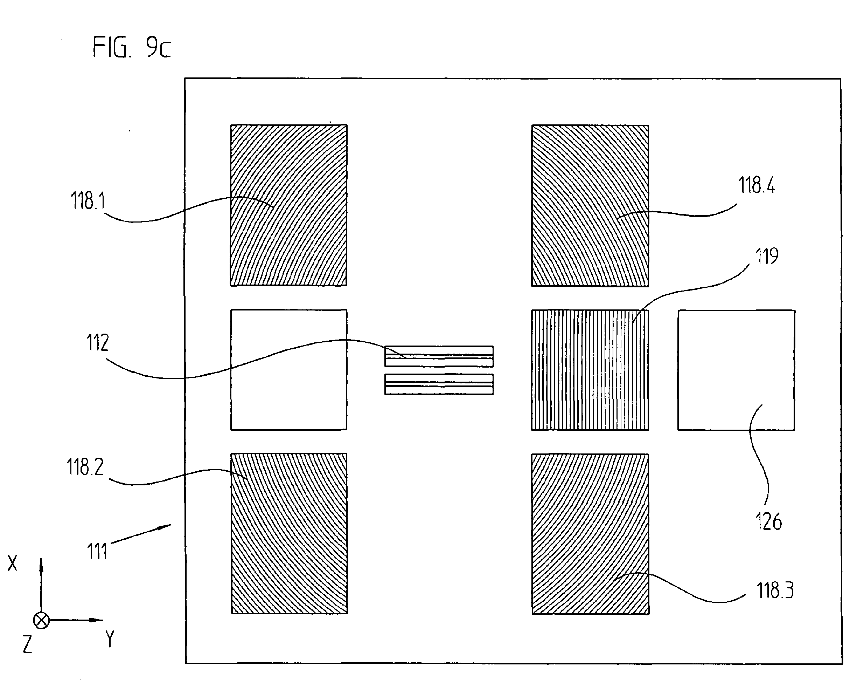

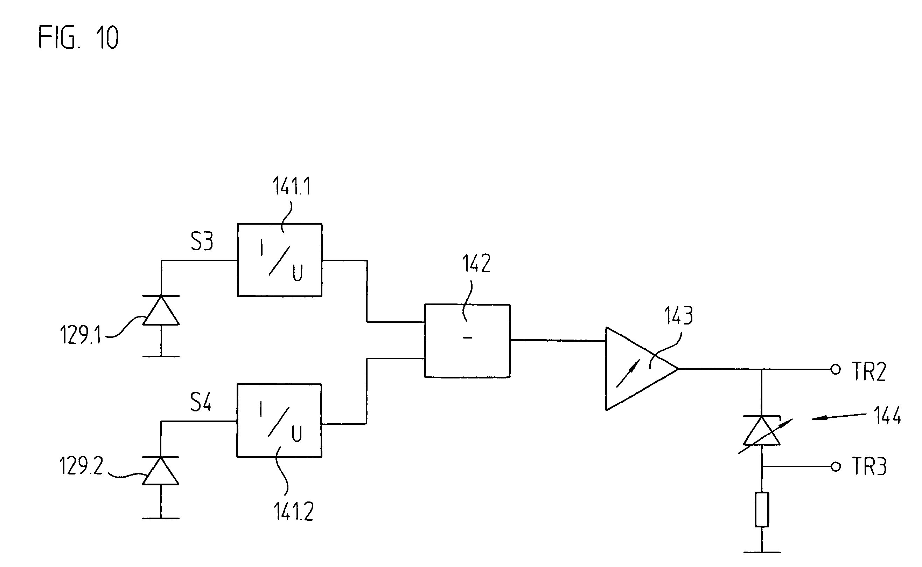

Anhand der Figuren 9a - 9c sowie 10 sei eine dritte Ausführungsform der vorliegenden Erfindung beschrieben, die auf Seiten der Abtasteinheit neben den oben erläuterten Komponenten zur Referenzimpuls- und Inkrementalsignalerzeugung ferner Korrekturmittel umfasst, die eine Erzeugung von Hilfssignalen ermöglichen. Diese Hilfssignale stellen ein Maß für die vorher erwähnte - fehlerverursachende - Winkeländerung dar und können im Hinblick auf eine Eliminierung derartiger Fehler ausgewertet werden. In der nachfolgenden Beschreibung sei lediglich auf die Erzeugung und Nutzung der Hilfssignale eingegangen. Die Referenzimpuls- und Inkrementalsignalerzeugung ist bzgl. des verwendeten Abtastprinzips identisch mit dem ersten Ausführungsbeispiel.

Die Korrekturmittel sind in Figur 9a im Bereich des rechten Teils der Abtastplatte 111 der Abtasteinheit 110 angeordnet und dort mit den Bezugszeichen 126, 127, 128.1, 129.1, 129.2 versehen. Die Figuren 7b und 7c zeigen analog zum ersten Ausführungsbeispiel Draufsichten auf die Ober- und Unterseite der Abtastplatte 111 mit den Korrekturmitteln 127, 128.1, 128.2 bzw. 126.

Zur Erzeugung der Hilfssignale wird gemäß Figur 7a aus dem von der Lichtquelle 114 kommenden Strahlenbündel über das Aufspaltgitter 119 ein Teilstrahlenbündel abgespalten, das in Richtung einer reflektierenden Fresnellinse 127 propagiert, die auf der Oberseite der Abtastplatte 111 angeordnet ist. Die Fresnellinse 127 ist optisch dergestalt dimensioniert, dass ihr bildseitiger Brennpunkt in der Ebene des Aufspaltgitters 119 liegt. Das Teilstrahlenbündel wird von der Fresnellinse 127 zur Hilfssignal-Erzeugung in Richtung eines Reflektorelements 126 auf der Unterseite der Abtastplatte 111 umgelenkt, das in der Brennebene der Fresnellinse 127 angeordnet ist. Vom Reflektorelement 126 erfolgt die Rückumlenkung der Teilstrahlenbündel in Richtung der Oberseite der Abtastplatte, wo zwei senkrecht zueinander angeordnete periodische Gitterstrukturen 128.1, 128.2 mit unterschiedlicher Gitterkonstante platziert sind. Diesen sind zwei Hilfssignal-Detektorelemente 129.1, 129.2 nachgeordnet, die die von den Gitterstrukturen 128.1, 128.2 abgelenkten Teilstrahlenbündel erfassen.

Wie aus Figur 8 ersichtlich ist, sind die beiden Hilfssignal-Detektorelemente 129.1, 129.2 über ein Differenzbildungselement 142 in Differenz zueinander verschaltet. Das resultierende Differenzsignal wird als Hilfssignal einem einstellbaren Verstärkerelement 143 zugeführt, an dessen Ausgang die Triggerschwelle TR2 resultiert, bzw. über das Einstell-Element 144 die Triggerschwelle TR3. Das Einstell-Element 144 kann z.B. als regelbare Zenerdiode ausgebildet sein, über das ein konstanter Spannungsabfall eingestellt wird. Damit bleibt die Breite des Referenzimpulssignals gleich, lediglich dessen Lage wird nachgeregelt.

Die derart erzeugten Triggerschwellen TR2, TR3 können in der Schaltungsanordnung gemäß Figur 5 als Referenzsignale bzw. Triggerschwellen der Komparatoren 24.2, 24.3 genutzt werden.

Eine eventuelle Änderung des Einfallswinkels der von der Lichtquelle 114 kommenden Strahlenbündel in Messrichtung x hat in diesem Ausführungsbeispiel zur Folge, dass sich die Lage des erzeugten Bildes im Übergangsbereich der Gitterstrukturen 128.1, 128.2 ändert. Als Konsequenz hieraus wiederum verändert sich das erzeugte Differenzsignal, welches demzufolge als Maß für eine derartige Winkeländerung fungieren kann.

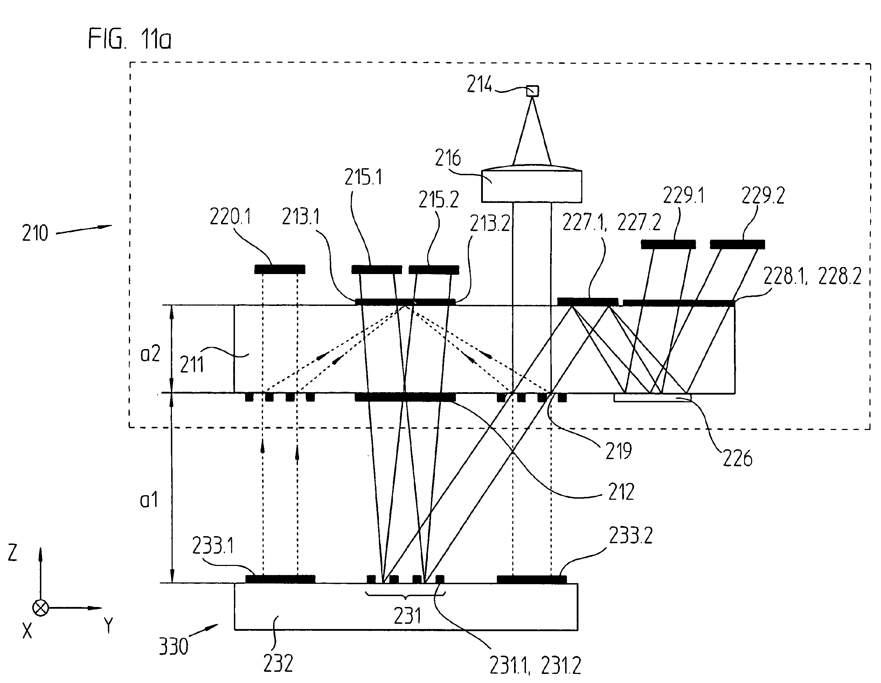

Eine vierte Ausführungsform der erfindungsgemäßen Vorrichtung mit einer zweiten Variante von Korrekturmitteln zur Erzeugung von Hilfssignalen sei abschließend anhand der Figuren 11a - 11c beschrieben.

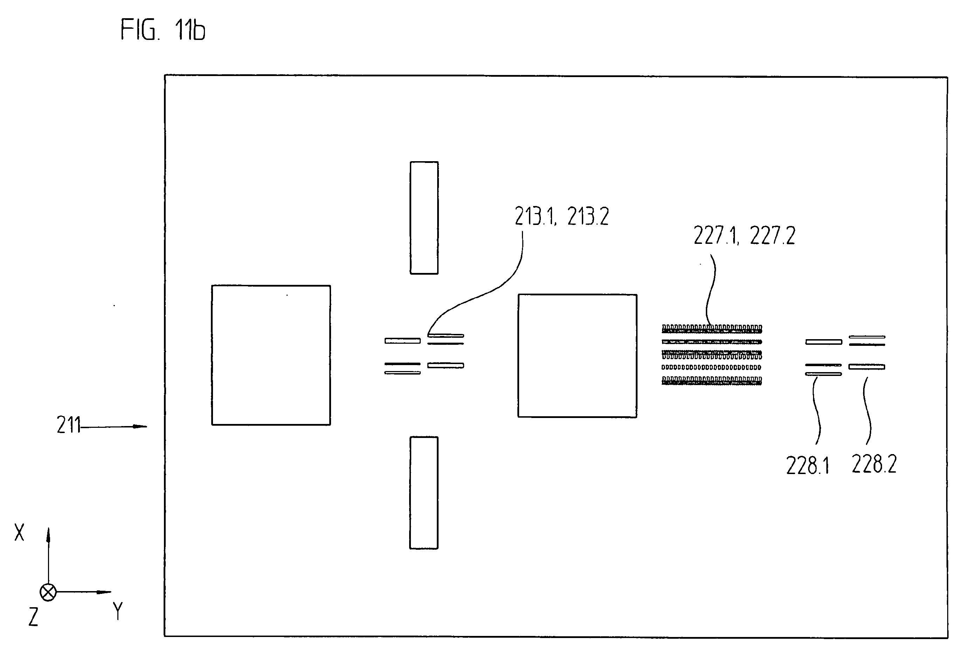

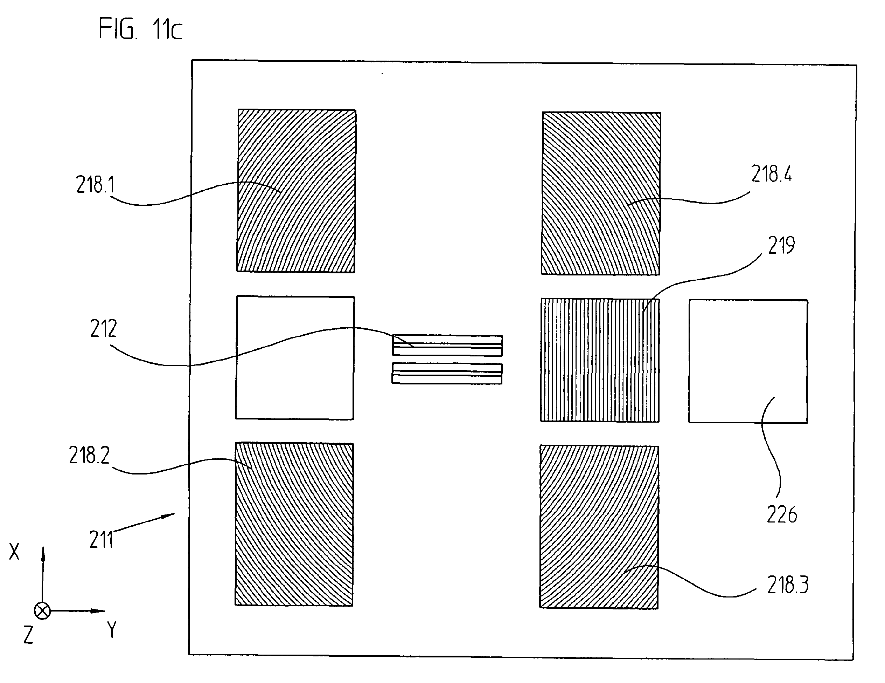

Die verschiedenen Korrekturmittel sind in Figur 11a ebenfalls wieder im Bereich des rechten Teils der Abtastplatte 211 der Abtasteinheit 210 angeordnet und sind dort mit den Bezugszeichen 226, 227.1, 227.2, 228.1, 229.1, 129.2 versehen. Wie im dritten Beispiel zeigen die Figuren 11b und 11c analog zum ersten Ausführungsbeispiel Draufsichten auf die Ober- und Unterseite der Abtastplatte 211 mit den Korrekturmitteln 227.1, 227.2, 228.1, 228.2 bzw. 226.

Zur Erzeugung der Hilfssignale wird gemäß Figur 11a wie im vorherigen Beispiel aus dem von der Lichtquelle 214 kommenden Strahlenbündel über das Aufspaltgitter 219 ein Teilstrahlenbündel abgespalten. Dieses Teilstrahlenbündel trifft anschließend auf eine auf der der Reflexions-Maßverkörperung 230 abgewandten Seite der Abtastplatte 211 angeordnete Gitterlinsenstruktur 227.1, 227.2. Diese entspricht bzgl. ihrer geometrischen und optischen Ausgestaltung der Referenzmarkierung 321 auf der Reflexions-Maßverkörperung und besitzt einen Brennpunkt in der Ebene des Aufspaltgitters 219. Von der Gitterlinsenstruktur 227.1, 227.2 erfolgt eine Rückreflexion der Teilstrahlenbündel in Richtung eines Reflektorelements 226, das im Brennpunkt der Gitterlinsenstruktur 227.1, 227.2 auf der Unterseite der Abtastplatte 211 angeordnet ist. Die von dort reflektierten Teilstrahlenbündel treffen daraufhin auf zwei Blendenstrukturen 228.1, 228.2 mit einer Mehrzahl von Blendenöffnungen, die auf der Oberseite der Abtastplatte 211 angeordnet sind. Über zwei nachgeordnete Hilfssignal-Detektorelemente 229.1, 229.2 wird das durch die Blendenöffnungen der Blendenstrukturen 228.1, 228.2 transmittierte Licht erfasst. Die an den Ausgängen der Hilfssignal-Detektorelemente 229.1, 229.2 resultierenden Signale werden dann wie im vorherigen Beispiel zu einem Differenzsignal verschaltet, das als Hilfssignal zur Einstellung der Triggerschwellen TR2, TR3 dient. Hierzu kann dann die gleiche Schaltungsanordnung verwendet werden, wie sie anhand von Fig. 10 bereits beschrieben wurde.

Auch über diese Variante von vorgesehenen Korrekturmitteln lässt sich die oben erwähnte eventuelle Schwankung des Einfallswinkels der Strahlenbündel auf die Referenzmarkierung erfassen respektive korrigieren.

Neben den erläuterten Ausführungsbeispielen gibt es im Rahmen der vorliegenden Erfindung selbstverständlich noch weitere Ausgestaltungsmöglichkeiten.

So wäre etwa anstelle des in Fig. 1b erkennbaren schrägen Einfalls des Beleuchtungsstrahlenbündels vom Aufspaltgitter 19 auf die Referenzmarkierung 31 auch möglich, eine senkrecht einfallende Beleuchtung der Referenzmarkierung 31 zu realisieren. Eine derartige Variante würde Vorteile hinsichtlich der Lage der Referenzimpulssignale bei eventuellen Verkippungen von Abtasteinheit und Reflexions-Maßverkörperung in bestimmten Richtungen bieten.

Wie bereits oben angedeutet können darüberhinaus sowohl lineare als auch rotatorische Messanordnungen auf Basis der erfindungsgemäßen Überlegungen ausgebildet werden etc..

## Patentansprüche

1. Positionsmesseinrichtung zur Erzeugung eines Referenzimpulssignals (R1) an mindestens einer Referenzposition ($X_{REF}$) mit einer Abtasteinheit (10) sowie einer hierzu in mindestens einer Messrichtung (x) beweglichen Reflexions-Maßverkörperung (30),

   - wobei die Abtasteinheit (10) zur Erzeugung des Referenzimpulssignals (RI) mehrere optische Elemente umfasst, worunter mindestens eine Abbildungsoptik (12), sowie mindestens zwei in einer Blendenebene angeordnete Blendenstrukturen (13.1, 13.2) mit jeweils mehreren Blendenöffnungen sind und der Abtasteinheit (10) ferner eine Lichtquelle (14) sowie mindestens zwei Detektorelemente (15.2) zugeordnet sind,
   - die Reflexions-Maßverkörperung (30) an der mindestens einen Referenzposition ($X_{REF}$) eine Referenzmarkierung (31) umfasst, die
   - mindestens einen Satz erster Strukturelemente (31.1) aufweist, die in der Ebene der Reflexions-Maßverkörperung (30) senkrecht zur Messrichtung (x) periodisch mit einer ersten Transversalperiodizität (T1) angeordnet sind und
   - mindestens einen Satz zweiter Strukturelemente (31.2) aufweist, die in der Ebene der Reflexions-Maßverkörperung (30) senkrecht zur Messrichtung (x) periodisch mit einer zweiten Transversalperiodizität (T2) angeordnet sind, wobei sich die erste und die zweite Transversalperiodizität (T1, T2) voneinander unterscheiden und
   - die Strukturelemente (31.1, 31.2) als diffraktive Strukturelemente ausgebildet sind, die in der Messrichtung (x) optisch wie eine Zylinderlinse mit einer bestimmten Brennweite (f) wirken und senkrecht zur Messrichtung (x) wie ein Ablenkgitter mit der ersten oder zweiten Transversalperiodizität (T1, T2) wirken.

2. Positionsmesseinrichtung nach Anspruch 1, wobei die Strukturelemente (31.1, 31.2) in Messrichtung (x) einen virtuellen oder reellen Brennpunkt im Brennweiten-Abstand f von der Reflexions-Maßverkörperung (30) besitzen.

3. Positionsmesseinrichtung nach Anspruch 1, wobei die Brennweite (f) der Strukturelemente (31.1, 31.2)) dem halben Abstand des neutralen Drehpunktes (N) von der Reflexions-Maßverkörperung (30) entspricht und der neutrale Drehpunkt (N) als derjenige Punkt definiert ist, um den eine Verkippung der Abtasteinheit (10) oder der Reflexions-Maßverkörperung (30) möglich ist, ohne dass ein Positionsfehler resultiert.

4. Positionsmesseinrichtung nach Anspruch 1, wobei die Abbildungsoptik (12) in der Abtasteinheit (10) derart dimensioniert ist, dass darüber eine Abbildung der bildseitigen Brennebene der Strukturelemente (31.1, 31.2) in die Blendenebene resultiert.

**5.** Positionsmesseinrichtung nach Anspruch 1, wobei die Referenzmarkierung (31) jeweils mehrere Sätze erster und zweiter Strukturelemente (31.1, 31.2) umfasst und diese parallel und spiegelsymmetrisch zu einer Symmetrieachse (S) senkrecht zur Messrichtung (x) in der Maßverkörperungsebene angeordnet sind, wobei sich jeweils Strukturelemente (31.1, 31.2) mit unterschiedlicher Transversalperiodizität (T1, T2) spiegelsymmetrisch gegenüberliegen.

**6.** Positionsmesseinrichtung nach Anspruch 1, wobei die einzelnen Strukturelemente (31.1, 31.2) eine Querschnittsform aufweisen, die sich aus zwei in Quererstreckungsrichtung (y) parallelen Berandungsgeraden und zwei in Längserstreckungsrichtung (x) gekrümmten, parallelen Berandungslinien zusammensetzt.

**7.** Positionsmesseinrichtung nach mindestens einem der vorangehenden Ansprüche, wobei

- die Reflexions-Maßverkörperung (30) ferner mindestens eine periodische, sich in Messrichtung (x) erstreckende Inkrementalteilung () 33.1, 33.2) aufweist und
- die Abtasteinheit (10) ferner Abtastmittel (17.1, 17.2, 18.1, 18.2, 18.3, 18.4, 20.1, 20.2, 20.3) umfasst, die zur Erzeugung periodischer Inkrementalsignale ($INC_A$, $INC_B$) im Fall der Relativbewegung von Reflexions-Maßverkörperung (30) und Abtasteinheit (10) dienen.

**8.** Positionsmesseinrichtung nach Anspruch 7, wobei die Brennweite (f) der Strukturelemente (31.1, 31.2) dergestalt gewählt ist, dass darüber eine Anpassung bzgl. der Lage des neutralen Drehpunkts (N) der Referenzimpulssignal-Erzeugung an die Lage des neutralen Drehpunkts der Inkrementalsignalerzeugung erfolgt und wobei der neutrale Drehpunkt (N) als derjenige Punkt definiert ist, um den eine Verkippung der Abtasteinheit (10) oder der Reflexions-Maßverkörperung (30) möglich ist, ohne dass ein Positionsfehler resultiert.

**9.** Positionsmesseinrichtung nach mindestens einem der vorangehenden Ansprüche, wobei die positionsmäßige Anordnung der Blendenöffnungen der beiden Blendenstrukturen (13.1, 13.2) in Messrichtung (x) auf die Anordnung der Strukturelemente (31.1, 31.2) der Referenzmarkierung (31) abgestimmt ist.

**10.** Positionsmesseinrichtung nach mindestens einem der vorangehenden Ansprüche, wobei die Abbildungsoptik (12) als Linsenarray, bestehend aus mehreren Einzellinsen, ausgebildet ist.

**11.** Positionsmesseinrichtung nach mindestens einem der vorangehenden Ansprüche, wobei die Abtasteinheit (10) eine Abtastplatte (11) umfasst, auf der die Blendenstrukturen (13.1, 13.2) und die Abbildungsoptik (12) angeordnet ist.

**12.** Positionsmesseinrichtung nach Anspruch 11, wobei die Abtasteinheit (10) eine Abtastplatte (11) umfasst,

- auf deren der Reflexions-Maßverkörperung (30) abgewandten Seite die Blendenstrukturen (13.1, 13.2) angeordnet sind, die als lichtdurchlässig/lichtundurchlässige Strukturen ausgebildet sind und
- auf deren der Reflexions-Maßverkörperung (30) zugewandten Seite die Abbildungsoptik (12) angeordnet ist.

**13.** Positionsmesseinrichtung nach Anspruch 11, wobei die Abtasteinheit (310) eine Abtastplatte (311) umfasst, auf deren der Reflexions-Maßverkörperung (330) zugewandten Seite die Blendenstrukturen (313.1, 313.2) und die Abbildungsoptik (312) angeordnet sind und die Blendenstrukturen (313.1, 313.2) als reflektierend/nichtreflektierende Strukturen ausgebildet sind.

**14.** Positionsmesseinrichtung nach Anspruch 7 und 11, wobei auf der Abtastplatte (11) ferner ein Aufspaltgitter (19) angeordnet ist, über welches eine Aufspaltung eines von der Lichtquelle (14) kommenden Strahlenbündels in ein zur Referenzimpulssignalerzeugung genutztes Teilstrahlenbündel und in ein zur Inkrementalsignalerzeugung genutztes Teilstrahlenbündel erfolgt

**15.** Positionsmesseinrichtung nach Anspruch 14, wobei das Aufspaltgitter (319) derart ausgebildet ist, dass eine konvergente Beleuchtung der Referenzmarkierung (331) auf der Reflexions-Maßverkörperung (330) resultiert.

**16.** Positionsmesseinrichtung nach Anspruch 15, wobei das Aufspaltgitter (319) als diffraktives Strahlteilerelement mit gekrümmten Gitterlinien ausgebildet ist.

**17.** Positionsmesseinrichtung nach Anspruch 15, wobei auf der Seite der Abtastplatte (311), die abgewandt zur Reflexions-Maßverkörperung (30) orientiert ist, ein oder mehrere Reflektorelemente (321.1, 321.2) angeordnet sind, die ein darauf einfallendes Strahlenbündel wieder in Richtung der Seite der Abtastplatte (311) umlenken, die der Reflexions-Maßverkörperung (330) zugewandt ist.

18. Positionsmesseinrichtung nach Anspruch 14, wobei das Aufspaltgitter (19) auf der Seite der Abtastplatte (11) angeordnet ist, die der Reflexions-Maßverkörperung (30) zugewandt ist.

19. Positionsmesseinrichtung nach Anspruch 7, wobei den zwei Detektorelementen (15.1, 15.2) ein Summen- und ein Differenzbildungselement (22, 23) nachgeordnet ist und diesen wiederum mehrere Komparatorelemente (24.1, 24.2, 24.3) mit jeweils definiert vorgegebenen Triggerschwellen (TR1, TR2, TR3) nachgeordnet sind, die dergestalt miteinander verschaltet sind, dass ausgangsseitig ein Referenzimpulssignal (RI) mit einer Breite ($b_{RI}$) resultiert, die der Breite der erzeugten Inkrementalsignale ($INC_A$, $INC_B$) entspricht.

20. Positionsmesseinrichtung nach mindestens einem der vorangehenden Ansprüche, wobei die Abtasteinheit (110; 210) ferner Korrekturmittel (126, 127, 128, 129.1, 129.2; 226, 227, 228, 229.1, 229.2) umfasst, um Hilfssignale zu erzeugen, die ein Maß für die Änderung des Winkels in Bezug auf die Abtastplatte (111; 211) darstellen, unter dem ein von der Lichtquelle (114; 214) kommendes Strahlenbündel in Richtung der Referenzmarkierung (131; 231) propagiert.

21. Positionsmesseinrichtung nach Anspruch 14, 19 und 20, wobei die Abtasteinheit (110) folgende Korrekturmittel (126, 127, 128, 129.1, 129.2) zur Erzeugung der Hilfssignale umfasst:

- eine auf der der Reflexions-Maßverkörperung (130) abgewandten Seite der Abtastplatte angeordnete Fresnellinse (127), deren Brennpunkt in der Ebene des Aufspaltgitters (119) liegt und das von einem Teilstrahlenbündel beaufschlagt wird, das vom Aufspaltgitter (119) aus dem einfallenden Strahlenbündel abgespalten wird,
- einem Reflektorelement (126), der im Brennpunkt der Fresnellinse () 127) auf der der Reflexions-Maßverkörperung (130) zugewandten Seite der Abtastplatte (111) angeordnet ist,
- zwei senkrecht zueinander angeordnete periodische Gitterstrukturen (128.1, 128.2) auf der der Reflexions-Maßverkörperung (130) abgewandten Seite der Abtastplatte (111),
- zwei Hilfssignal-Detektorelemente (129.1, 129.2), die über ein Differenzbildungselement (142) in Differenz zueinander verschaltet sind und wobei das resultierende Differenzsignal als Hilfssignal zur Einstellung der Triggerschwellen (TR2, TR3) dient.

22. Positionsmesseinrichtung nach Anspruch 14, 19 und 20, wobei die Abtasteinheit (210) folgende Korrekturmittel (126, 127, 128, 129.1, 129.2) zur Erzeugung der Hilfssignale umfasst:

- eine auf der der Reflexions-Maßverkörperung (230) abgewandten Seite der Abtastplatte (211) angeordnete Gitterlinsenstruktur (227.1, 227.2), die der Referenzmarkierung (321) entspricht und deren Brennpunkt in der Ebene des Aufspaltgitters (219) liegt und die von einem Teilstrahlenbündel beaufschlagt wird, das vom Aufspaltgitter (219) aus dem einfallenden Strahlenbündel abgespalten wird,
- ein Reflektorelement (226), das im Brennpunkt der Gitterlinsenstruktur (227.1, 227.2) auf der der Reflexions-Maßverkörperung (230) zugewandten Seite der Abtastplatte (211) angeordnet ist,
- zwei auf der der Reflexions-Maßverkörperung (230) abgewandten Seite der Abtastplatte (211) angeordnete Blendenstrukturen (228.1, 228.2),
- zwei Hilfssignal-Detektorelemente (229.1, 229.2), die in Differenz zueinander verschaltet sind und wobei das resultierende Differenzsignal als Hilfssignal zur Einstellung der Triggerschwellen (TR2, TR3) dient.

**Claims**

1. Position measuring device for generating a reference pulse signal (RI) at at least one reference position ($X_{REF}$) by means of a scanning unit (10) and a reflection-type material measure (30) movable in respect of said position in at least one measuring direction (x),

- wherein the scanning unit (10) comprises a number of optical elements for generating the reference pulse signal (RI), including at least one imaging optics element (12) and at least two diaphragm structures (13.1, 13.2) arranged in one diaphragm plane and having in each case a number of diaphragm openings and furthermore a light source (14) and at least two detector elements (15.2) are allocated to the scanning unit (10),
- the reflection-type material measure (30) comprises at the at least one reference position ($X_{REF}$) a reference marking (31) which

- has at least one set of first structural elements (31.1) which are arranged perpendicularly to the measuring direction (x) in the plane of the reflection-type material measure (30) periodically with a first transverse periodicity (T1) and

- has at least one set of second structural elements (31.2) which are arranged perpendicularly to the measuring direction (x) in the plane of the reflection-type material measure (30) periodically with a second transverse periodicity (T2), wherein the first and the second transverse periodicity (T1, T2) differ from one another, and

- the structural elements (31.1, 31.2) are constructed as diffractive structural elements which act optically like a cylindrical lens having a particular focal length (f) in the measuring direction (x) and act perpendicularly to the measuring direction (x) like a deflection grating with the first or second transverse periodicity (T1, T2).

2. Position measuring device according to Claim 1, wherein the structural elements (31.1, 31.2) have a virtual or real focal point in the measuring direction (x) at the focal-length distance f from the reflection-type material measure (30).

3. Position measuring device according to Claim 1, wherein the focal length (f) of the structural elements (31.1, 31.2) corresponds to half the distance of the neutral point of rotation (N) from the reflection-type material measure (30) and the neutral point of rotation (N) is defined as the point around which a tilting of the scanning unit (10) or of the reflection-type material measure (30) is possible without resulting in a position error.

4. Position measuring device according to Claim 1, wherein the imaging optics element (12) in the scanning unit (10) is dimensioned in such a manner that it produces imaging of the image-side focal plane of the structural elements (31.1, 31.2) into the diaphragm plane.

5. Position measuring device according to Claim 1, wherein the reference marking (31) comprises in each case a number of sets of first and second structural elements (31.1, 31.2) and these are arranged in parallel and mirror-symmetrically with respect to an axis of symmetry (S) perpendicularly to the measuring direction (x) in the plane of the material measure, structural elements (31.1, 31.2) having different transverse periodicity (T1, T2) in each case being located opposite one another mirror-symmetrically.

6. Position measuring device according to Claim 1, wherein the individual structural elements (31.1, 31.2) have a cross sectional shape which is composed of two edging lines parallel in the direction of transverse extension (y) and two parallel edging lines curved in the direction of longitudinal extension (x).

7. Position measuring device according to at least one of the preceding claims, wherein

- the reflection-type material measure (30) has also at least one periodic incremental division (33.1, 33.2) extending in the measuring direction (x) and

- the scanning unit (10) also comprises scanning means (17.1, 17.2, 18.1, 18.2, 18.3, 18.4, 20.1, 20.2, 20.3) which are used for generating periodic incremental signals ($INC_A$, $INC_B$) in the case of the relative movement of reflection-type material measure (30) and scanning unit (10).

8. Position measuring device according to Claim 7, wherein the focal length (f) of the structural elements (31.1, 31.2) is selected in such a manner that via it an adaptation with respect to the position of the neutral point of rotation (N) of the reference pulse signal generation to the position of the neutral point of rotation of the incremental signal generation takes place and wherein the neutral point of rotation (N) is defined as the point around which tilting of the scanning unit (10) or of the reflection-type material measure (30) is possible without resulting in a position error.

9. Position measuring device according to at least one of the preceding claims, wherein the position-related arrangement of the diaphragm openings of the two diaphragm structures (13.1, 13.2) in the measuring direction (x) is matched to the arrangement of the structural elements (31.1, 31.2) of the reference marking (31).

10. Position measuring device according to at least one of the preceding claims, wherein the imaging optics element (12) is constructed as a lens array consisting of a number of individual lenses.

11. Position measuring device according to at least one of the preceding claims, wherein the scanning unit (10) comprises a scanning plate (11) on which the diaphragm structures (13.1, 13.2) and the imaging optics element (12) are arranged.

12. Position measuring device according to Claim 11, wherein the scanning unit (10) comprises a scanning plate (11),

- on the side of which facing away from the reflection-type material measure (30) the diaphragm structures (13.1, 13.2) are arranged which are constructed as transparent/opaque structures, and
- on the side of which facing the reflection-type material measure (30) the imaging optics element (12) is arranged.

13. Position measuring device according to Claim 11, wherein the scanning unit (310) comprises a scanning plate (311), on the side of which facing the reflection-type material measure (330) the diaphragm structures (313.1, 313.2) and the imaging optics element (312) are arranged and the diaphragm structures (313.1, 313.2) are constructed as reflecting/non-reflecting structures.

14. Position measuring device according to Claim 7 and 11, wherein on the scanning plate (11), a dividing grating (19) is also arranged via which a beam of rays coming from the light source (14) is divided into a part-beam used for the reference pulse signal generation and into a part-beam used for the incremental signal generation.

15. Position measuring device according to Claim 14, wherein the dividing grating (319) is constructed in such a manner that a convergent illumination of the reference marking (331) on the reflection-type material measure (330) results.

16. Position measuring device according to Claim 15, wherein the dividing grating (319) is constructed as diffractive beam divider element having curved grating lines.

17. Position measuring device according to Claim 15, wherein on the side of the scanning plate (311) which is oriented facing away from the reflection-type material measure (30), one or more reflector elements (321.1, 321.2) are arranged which deflect an incident beam back in the direction of the side of the scanning plate (311) which faces the reflection-type material measure (330).

18. Position measuring device according to Claim 14, wherein the dividing grating (19) is arranged on the side of the scanning plate (11) which faces the reflection-type material measure (30).

19. Position measuring device according to Claim 7, wherein the two detector elements (15.1, 15.2) are followed by a sum- and a difference-forming element (22, 23) and these, in turn, are followed by a number of comparator elements (24.1, 24.2, 24.3) having in each case definedly predetermined trigger thresholds (TR1, TR2, TR3) and which are interconnected with one another in such a manner that a reference pulse signal (RI) having a width ($b_{RI}$) results at the output end, which width corresponds to the width of the incremental signals ($INC_A$, $INC_B$) generated.

20. Position measuring device according to at least one of the preceding claims, wherein the scanning unit (110; 210) also comprises correction means (126, 127, 128, 129.1, 129.2; 226, 227, 228, 229.1, 229.2) in order to generate auxiliary signals which represent a measure of the change of the angle with respect to the scanning plate (111; 211) at which a beam coming from the light source (114; 214) propagates in the direction of the reference marking (131; 231).

21. Position measuring device according to Claim 14, 19 and 20, wherein the scanning unit (110) comprises the following correction means (126, 127, 128, 129.1, 129.2) for generating the auxiliary signals:

- a Fresnel lens (127) arranged on the side of the scanning plate facing away from the reflection-type material measure (130), the focal point of which is in the plane of the dividing grating (119) and to which a part-beam is applied which is divided off from the incident beam by the dividing grating (119),
- a reflector element (126) which is arranged in the focal point of the Fresnel lens (127) on the side of the scanning plate (111) facing the reflection-type material measure (130),
- two periodic grating structures (128.1, 128.2) arranged perpendicularly to one another on the side of the scanning plate (111) facing away from the reflection-type material measure (130),
- two auxiliary-signal detector elements (129.1, 129.2) which are interconnected with one another in difference via a difference-forming element (142) and wherein the resultant difference signal is used as auxiliary signal for adjusting the trigger thresholds (TR2, TR3).

22. Position measuring device according to Claim 14, 19 and 20, wherein the scanning unit (210) comprises the following correction means (126, 127, 128, 129.1, 129.2) for generating the auxiliary signals:

- a grating lens structure (227.1, 227.2) arranged on the side of the scanning plate (211) facing away from the reflection-type material measure (230), which grating lens structure corresponds to the reference marking (321) and the focal point of which is in the plane of the dividing grating (219) and to which a part-beam is applied which is divided off from the incident beam by the dividing grating (219),

- a reflector element (226) which is arranged in the focal point of the grating lens structure (227.1, 227.2) on the side of the scanning plate (211) facing the reflection-type material measure (230),

- two diaphragm structures (228.1, 228.2) arranged on the side of the scanning plate (211) facing away from the reflection-type material measure (230),

- two auxiliary-signal detector elements (229.1, 229.2) which are interconnected with one another in difference and wherein the resultant difference signal is used as auxiliary signal for adjusting the trigger thresholds (TR2, TR3).

**Revendications**

1. Dispositif de mesure de position destiné à générer un signal impulsionnel de référence (RI) à au moins une position de référence ($X_{REF}$) au moyen d'une unité d'exploration (10) et d'une règle de réflexion (30) mobile à cet effet dans au moins une direction de mesure (x),

   - dans lequel l'unité d'exploration (10) comprend, pour générer le signal impulsionnel de référence (RI), une pluralité d'éléments optiques en dessous desquels se trouvent au moins une optique de formation d'image (12), ainsi qu'au moins deux structures de diaphragme (13.1, 13.2) disposées dans un plan de diaphragme comportant respectivement une pluralité d'ouvertures de diaphragmes et dans lequel une source de lumière (14) ainsi qu'au moins deux éléments détecteurs (15.2) sont associés à l'unité d'exploration (10),
   - la règle de réflexion (30) comprend un marquage de référence (31) à l'au moins une position de référence ($X_{REF}$),
   - qui comporte au moins une série de premiers éléments structurels (31.1) disposés dans le plan de la règle de réflexion (30) perpendiculairement à la direction de mesure (x) de manière périodique avec une première périodicité transversale (T1), et
   - qui comporte au moins une série de seconds éléments structurels (31.1) disposés dans le plan de la règle de réflexion (30) perpendiculairement à la direction de mesure (x) de manière périodique avec une seconde périodicité transversale (T2), les première et seconde périodicités transversales (T1, T2) étant différentes l'une de l'autre, et
   - les éléments structurels (31.1, 31.2) sont réalisés sous la forme d'éléments structurels diffractants qui agissent optiquement dans la direction de mesure (x), comme une lentille cylindrique ayant une longueur focale (f) déterminée, et qui agissent perpendiculairement à la direction de mesure (x), comme un réseau de déviation présentant la première ou la seconde périodicité transversale (T1, T2).

2. Dispositif de mesure de position selon la revendication 1, dans lequel les éléments structurels (31.1, 31.2) possèdent un foyer virtuel ou réel dans la direction de mesure (x) à la distance focale f de la règle de réflexion (30).

3. Dispositif de mesure de position selon la revendication 1, dans lequel la longueur focale (f) des éléments structurels (31.1, 31.2) correspond à la moitié de la distance du centre neutre de rotation (N) à la règle de réflexion (30) et le centre neutre de rotation (N) est défini comme étant le point autour duquel un basculement de l'unité d'exploration (10) ou de la règle de réflexion (30) est possible sans que cela conduise à une erreur de position.

4. Dispositif de mesure de position selon la revendication 1, dans lequel l'optique de formation d'image (12) est dimensionnée, dans l'unité d'exploration (10), de telle manière qu'elle conduise à une formation d'image du plan focal situé du côté image des éléments structurels (31.1, 31.2) dans le plan de diaphragme.

5. Dispositif de mesure de position selon la revendication 1, dans lequel le marquage de référence (31) comprend respectivement une pluralité de séries de premiers et seconds éléments structurels (31.1, 31.2) et dans lequel ceux-ci sont disposés parallèlement et de manière symétrique dans un miroir par rapport à un axe de symétrie (S) perpendiculairement à la direction de mesure (x) dans le plan de la règle, les éléments structurels (31.1, 31.2) étant en regard les uns des autres de manière symétrique dans un miroir avec des périodicités transversales (T1, T2) différentes.

6. Dispositif de mesure de position selon la revendication 1, dans lequel les éléments structurels individuels (31.1, 31.2) présentent une forme en section transversale qui se compose de deux droites de délimitation parallèles dans la direction d'extension transversale (y) et de deux lignes de délimitation parallèles incurvées dans la direction d'extension longitudinale (x).

7. Dispositif de mesure de position selon au moins l'une des revendications précédentes, dans lequel

- la règle de réflexion (30) comporte en outre au moins une graduation incrémentale périodique (33.1, 33.2) s'étendant dans la direction de mesure (x), et
- l'unité d'exploration (10) comprend en outre des moyens d'exploration (17.1, 17.2, 18.1, 18.2, 18.3, 18.4, 20.1, 20.2, 20.3) qui sont destinés à générer des signaux incrémentiels périodiques (INCA, INC$_B$) en cas de déplacement relatif de la règle de réflexion (30) et de l'unité d'exploration (10).

8. Dispositif de mesure de position selon la revendication 7, dans lequel la longueur focale (f) des éléments structurels (31.1, 32.2) est choisie de manière à ce qu'il se produise une adaptation de la position du centre neutre de rotation (N) de la génération du signal impulsionnel de référence à la position du centre neutre de rotation de la génération du signal incrémentiel et dans lequel le centre neutre de rotation (N) est défini comme étant le point autour duquel un basculement de l'unité d'exploration (10) ou de la règle de réflexion (30) est possible sans que cela conduise à une erreur de position.

9. Dispositif de mesure de position selon au moins l'une des revendications précédentes, dans lequel l'agencement en position des ouvertures de diaphragmes des deux structures de diaphragmes (13.1, 13.2) dans la direction de mesure (x) est ajusté à l'agencement des éléments structurels (31.1, 31.2) du marquage de référence (31).

10. Dispositif de mesure de position selon au moins l'une des revendications précédentes, dans lequel l'optique de formation d'image (12) est réalisée sous la forme d'un réseau de lentilles comprenant une pluralité de lentilles individuelles.

11. Dispositif de mesure de position selon au moins l'une des revendications précédentes, dans lequel l'unité d'exploration (10) comprend une plaque d'exploration (11) sur laquelle sont disposées les structures de diaphragmes (13.1, 13.2) et l'optique de formation d'image (12).

12. Dispositif de mesure de position selon la revendication 11, dans lequel l'unité d'exploration (10) comprend une plaque d'exploration (11),

- dont le côté qui est tourné à l'opposé de la règle de réflexion (30) porte les structures de diaphragmes (13.1, 13.2), qui sont réalisées sous la forme de structures transparentes à la lumière/opaques à la lumière, et
- dont le côté qui est tourné vers la règle de réflexion (30) porte l'optique de formation d'image (12).

13. Dispositif de mesure de position selon la revendication 11, dans lequel l'unité d'exploration (310) comprend une plaque d'exploration (311) dont le côté qui est tourné vers la règle de réflexion (330) porte les structures de diaphragmes (313.1, 313.2) et l'optique de formation d'image (312) et dans lequel les structures de diaphragmes (313.1, 313.2) sont réalisées sous la forme de structures réfléchissantes/non réfléchissantes.

14. Dispositif de mesure de position selon les revendications 7 et 11, dans lequel un réseau séparateur (19) est en outre disposé sur la plaque d'exploration (11), réseau par l'intermédiaire duquel il se produit une séparation d'un faisceau de rayonnement provenant de la source de lumière (14) en un faisceau de rayonnement partiel utilisé pour générer le signal impulsionnel de référence et en un faisceau de rayonnement partiel utilisé pour générer le signal incrémentiel.

15. Dispositif de mesure de position selon la revendication 14, dans lequel le réseau séparateur (319) est réalisé de telle manière qu'un éclairement convergent du marquage de référence (331) soit produit sur la règle de réflexion (330).

16. Dispositif de mesure de position selon la revendication 15, dans lequel le réseau séparateur (319) est réalisé sous la forme d'un élément séparateur de rayonnement diffractant comprenant des lignes de réseau incurvées.

17. Dispositif de mesure de position selon la revendication 15, dans lequel, du côté de la plaque d'exploration (311) qui est tourné à l'opposé de la règle de réflexion (30), sont disposés un ou plusieurs éléments réflecteurs (321.1, 321.2) qui dévient un faisceau de rayonnement incident sur ceux-ci pour le renvoyer dans la direction du côté de la plaque d'exploration (311) qui est tourné vers la règle de réflexion (330).

18. Dispositif de mesure de position selon la revendication 14, dans lequel le réseau séparateur (19) est disposé du côté de la plaque d'exploration (11) qui est tourné vers la règle de réflexion (30).

19. Dispositif de mesure de position selon la revendication 7, dans lequel un élément de calcul de somme et de différence (22, 23) est disposé en aval des deux éléments détecteurs (15.1, 15.2) et une pluralité d'éléments comparateurs (24.1, 24.2, 24.3) sont quant à eux disposés en aval de ceux-ci avec des seuils de déclenchement prédéterminés de manière respectivement définie (TR1, TR2, TR3), lesquels éléments sont connectés les uns aux autres de telle manière qu'il en résulte un signal impulsionnel de référence (RI) du côté de la sortie ayant une largeur ($b_{RI}$) qui correspond à la largeur des signaux incrémentiels générés (INCA, $INC_B$).

20. Dispositif de mesure de position selon au moins l'une des revendications précédentes, dans lequel l'unité d'exploration (110 ; 210) comprend en outre des moyens de correction (126, 127, 128, 129.1, 129.2 ; 226, 227, 228, 229.1, 229.2) pour générer des signaux auxiliaires qui représentent une mesure de la modification de l'angle, par rapport à la plaque d'exploration (111 ; 211), en dessous de laquelle un faisceau de rayonnement provenant de la source de lumière (114 ; 214) se propage dans la direction du marquage de référence (131 ; 231).

21. Dispositif de mesure de position selon les revendications 14, 19 et 20, dans lequel l'unité d'exploration (110) comprend les moyens de correction (126, 127, 128, 129.1, 129.2) suivants pour générer les signaux auxiliaires :

- une lentille de Fresnel (127) disposée du côté de la plaque d'exploration qui est tourné à l'opposé de la règle de réflexion (130), dont le foyer se situe dans le plan du réseau séparateur (19) et sur laquelle est incident un faisceau de rayonnement partiel qui est séparé du faisceau de rayonnement incident par le réseau séparateur (119),
- un élément réflecteur (126) qui est disposé au foyer de la lentille de Fresnel (127) du côté de la plaque d'exploration (111) qui est tourné vers la règle de réflexion (130),
- deux structures de réseau périodiques disposées perpendiculairement l'une à l'autre (128.1, 128.2) du côté de la plaque d'exploration (111) qui est tourné à l'opposé de la règle de réflexion (130),
- deux éléments détecteurs de signaux auxiliaires (129.1, 129.2) qui sont connectés l'un à l'autre de manière différentielle par l'intermédiaire d'un élément de calcul de différence (142) et dans lequel le signal de différence obtenu est utilisé en tant que signal auxiliaire pour le réglage des seuils de déclenchement (TR2, TR3).

22. Dispositif de mesure de position selon les revendications 14, 19 et 20, dans lequel l'unité d'exploration (210) comprend les moyens de correction (126, 127, 128, 129.1, 129.2) suivants pour générer les signaux auxiliaires :

- une structure de lentille réseau (227.1, 227.2) disposée du côté de la plaque d'exploration (211) qui est tourné à l'opposé de la règle de réflexion (230), laquelle structure correspond au marquage de référence (321), et dont le foyer se situe dans le plan du réseau séparateur (219) et sur laquelle est incident un faisceau de rayonnement partiel ayant été séparé du faisceau de rayonnement incident par le réseau séparateur (219),
- un élément réflecteur (226) qui est disposé au foyer de la structure de lentille réseau (227.1, 227.2) du côté de la plaque d'exploration (211) qui est tourné vers la règle de réflexion (230),
- deux structures de diaphragmes (228.1, 228.2) disposées du côté de la plaque d'exploration (211) qui est tourné à l'opposé de la règle de réflexion (230),
- deux éléments détecteurs de signaux auxiliaires (229.1, 229.2) qui sont connectés l'un à l'autre de manière différentielle et dans lequel le signal de différence obtenu est utilisé en tant que signal auxiliaire pour le réglage des seuils de déclenchement (TR2, TR3).

FIG. 1a

FIG. 1b

EP 1 923 672 B1

FIG. 1c

EP 1 923 672 B1

20.1  20.2  20.3

17.1

10

11

18.1

18.5

18.2

33.1

30

32

Z

Y

X

FIG. 2

EP 1 923 672 B1

FIG. 3a

18.1

18.5

12

18.2

11

18.3

19

18.4

X

Z Y

EP 1 923 672 B1

FIG. 3b

EP 1 923 672 B1

FIG. 4a

EP 1 923 672 B1

FIG. 4b

FIG. 4c

EP 1 923 672 B1

FIG. 4c

FIG. 5

EP 1 923 672 B1

FIG. 6a

FIG. 6b

EP 1 923 672 B1

FIG. 6c

EP 1 923 672 B1

FIG. 7a

EP 1 923 672 B1

FIG. 7b

EP 1 923 672 B1

FIG. 8a

EP 1 923 672 B1

318.1

318.3

318.5

313.1    313.2

319

318.2

312.1    312.2

311

318.4

X
Y
Z

FIG. 8b

317.1

321.1  321.2

311

317.2

X
Z ⊗
Y

EP 1 923 672 B1

FIG. 9a

EP 1 923 672 B1

FIG. 9b

FIG. 9c

118.1

118.4

119

112

126

118.2

111

118.3

X

Y

Z

EP 1 923 672 B1

FIG. 10

FIG. 11a

FIG. 11b

FIG. 11c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5073710 A
- US 5981941 A
- DE 102006042743